# EUROPÄISCHE PATENTSCHRIFT

(11) **EP 2 368 759 B1**
(45) Veröffentlichungstag und Bekanntmachung des Hinweises auf die Patenterteilung: **26.06.2013**
(21) Anmeldenummer: 11151400.6
(22) Anmeldetag: 19.01.2011
(51) Int. Cl.: B60P 7/08

(54) **Verfahren zum Sichern eines Ladungsgegenstandes und Ladungssicherungssystem**
Method for securing a load and load securing system
Procédé de sécurisation d'un objet de chargement et système de sécurisation de chargement

(30) Priorität: 25.03.2010 DE 102010003260
(43) Veröffentlichungstag der Anmeldung: 28.09.2011
(73) Patentinhaber: Zentis Logistik Service GmbH, 52070 Aachen (DE)
(72) Erfinder: Biermeier, Andreas, 52159, Roetgen (DE); Heinrichs, Josef, 52222, Stolberg (DE)
(74) Vertreter: Bauer, Dirk

(56) Entgegenhaltungen:
- WO-A2-2004/094271
- DE-U1- 7 810 909
- DE-U1- 20 302 929
- DE-U1-202006 015 899
- DE-U1-202008 006 098
- GB-A- 1 350 071
- GB-A- 2 348 865

## Beschreibung

### Einleitung

Die Erfindung betrifft ein Verfahren zum Sichern eines Ladungsgegenstandes in einem Transportfahrzeug, das eine Ladefläche und mindestens eine im rechten Winkel zu dieser sowie parallel zu einer Längsachse des Transportfahrzeugs verlaufende Wand aufweist, an der ladeflächennah eine parallel zu der Ladefläche verlaufende Befestigungsschiene zur Anbringung von Zugmitteln und/oder Halteelementen und/oder Fixierelementen angeordnet ist. Bei den Ladungsgegenständen handelt es sich um Container, insbesondere solche zur Aufnahme fließfähiger Lebensmittel, wie sie beispielsweise zur Befüllung mit Fruchtzubereitungen verwendet werden, die wiederum vorwiegend in der Molkereibranche als Bestandteil von Molkereiprodukten wie Joghurt, Pudding, Quark, Sauermilch o.ä. benötigt werden. Die Container besitzen ein einen ungefähr zylindrischen Hohlraum umschließendes Oberteil und ein Streben (Beine und/oder Querstreben) aufweisendes gestellartiges Unterteil. Aus Hygienegründen sind die Container gänzlich Schweißkonstruktionen aus Edelstahl.

Darüber hinaus betrifft die Erfindung ein Ladungssicherungssystem mit
- einer in eine Wand, die in Längsrichtung eines Transportfahrzeugs verläuft, integrierbaren Befestigungsschiene, die parallel zu und in der Nähe einer Ladefläche eines Transportfahrzeugs verläuft, die mit der Wand einen rechten Winkel einschließt und
- einem Zugmittel und/oder einem Halteelement, das mit der Befestigungsschiene verbindbar ist.

### Stand der Technik

Edelstahlcontainer für fließfähige Lebensmittelzubereitungen besitzen typischerweise Abmessungen von ca. 1,80 m Höhe und ca. 1 m Durchmesser im Bereich des zylindrischen Oberteils, wobei das aus Edelstahlrohren bestehende, vier Beine bzw. Füße aufweisende und insgesamt ein Gestell bildende Unterteil in einer Draufsicht im Wesentlichen von dem Querschnitt des Oberteils überdeckt ist. Im befüllten Zustand wiegen derartige Container je nach Bauart und Größe ca. 0,8 bis 1,0 Tonnen.

Üblicherweise werden derartige Container in Transportfahrzeugen mit Kofferaufbauten transportiert, wobei vermehrt isolierte Kühlkoffer mit aktivem Kühlaggregat zum Einsatz kommen, um mit demselben Fahrzeug z.B. auf einer Hinstrecke nicht kühlpflichtige Container und auf einer Rückstrecke kühlpflichtige Ware, wie beispielsweise Molkereiprodukte, transportieren zu können.

Stand der Technik beim Transport derartigen Lebensmittelcontainer ist die Unterbringung von bis zu 26 derartiger Container im Laderaum eines Sattelaufliegers, wobei die Anordnung in bis zu 13 kurzen Querreihen zu je zwei Containern erfolgt. Dabei werden in unmittelbarem Kontakt mit der Stirnwand des Fahrzeugs zwei Container platziert, von denen der eine in einer Ecke und der andere unmittelbar seitlich angrenzend an den ersten Container aufgestellt werden. Somit verbleibt zwischen dem zweiten Container und der zweiten Seitenwand ein Freiraum. Die nächste Querreihe wird nun so angeordnet, dass das zylindrische Oberteil des ersten Containers der zweiten Querreihe in den verbliebenen Freiraum der ersten Reihe eingreift. Der zweite Container wird sodann seitlich neben den ersten Container der zweiten Querreihe angeordnet. Somit schließen die Querreihen abwechselnd an die linke oder rechte Seitenwand des Kofferaufbaus an, wodurch sich eine gewisse formschlüssige Verbindung zwischen den Ladungsgegenständen ergibt. Im Anschluss an die letzte Querreihe wird meist eine horizontale Querstange als Spreizstange zwischen den gegenüberliegenden Seitenwänden angeordnet, um ein Verrutschen der Ladung nach hinten, in einen vor den Hecktüren verbleibenden Freiraum zu vermeiden.

Diese seit Jahrzehnten praktizierte Vorgehensweise bei der Ladungsanordnung und -sicherung hat sich im Grund genommen bewährt und zeichnet sich insbesondere durch den geringen Aufwand beim Belade- und Entladevorgang aus. Es hat sich jedoch gezeigt, dass bei Auftreten extremer Fahrsituationen mit großen Quer- oder Längsbeschleunigungen auf das Fahrzeug eine 100 %-ige Ladungssicherheit nicht immer gewährleistet werden kann. Insbesondere besteht die Gefahr, dass die gesetzlichen Anforderungen zur Ladungssicherung, insbesondere die Vorschriften der StVO, der StVZO, des HGB sowie der VDI-Richtlinie 2700 "Ladungssicherung auf Straßenfahrzeugen", nicht immer zur Gänze erfüllt werden können.

Aus der DE 101 14 409 A1 sind eine Einrichtung und ein Verfahren zum Befestigen eines Transportguts auf der Ladefläche eines Transportfahrzeugs bekannt. Dabei wird ein Zugmittel von einem Anschlag über einen Umlenkpunkt an einem vertikal ausgerichteten entlang der Ladefläche verschiebbaren Ständer um ein quaderförmiges Ladegut herum zu einem weiteren Anschlag geführt. Beide Anschläge befinden sich an der Ladefläche und zwar in der Nähe der Seitenwände in einander gegenüber liegenden Positionen. Nachteil dieses Systems ist die Notwendigkeit eines Vorhandenseins hinreichend stabiler Ständer an den Seitenwänden des Aufbaus, was insbesondere bei Kühlaufbauten nicht der Fall ist.

Die EP 2 113 416 A1 offenbart eine Anordnung zur Sicherung von Ladung auf Ladeflächen, wobei ein wesentlicher Bestandteil der vorbekannten Anordnung von einem so genannte Haltemittel in Form einer ladeflächennah verlaufenden und an der jeweiligen Seitenwand befestigten Befestigungsleiste gebildet wird. Die Befestigungsleiste ist mit Lochausnehmungen versehen, in die so genannte Basiselemente lösbar eingesetzt sind. Die Basiselemente sind um eine horizontale Achse verschwenkbar und mit wiederum verschwenkbaren Verzurrhaken in Form von Ösen versehen. In der EP 2 113 416 A1 sind keine Ausführungen darüber enthalten, wie Zugmittel an den gezeigten Verzurrhaken befestigt bzw. wie die Zugmittel um Ladungsgegenstände geführt werden sollen.

Die US 3,722,910 beschreibt ein Transportfahrzeug mit einer Befestigungsschiene in den Außenseiten der Ladebordwände, wobei Verzurrhaken innerhalb der Schiene in Längsrichtung verschiebbar sind und an beliebigen Stellen durch Verschwenken und damit einhergehendes Verkeilen fixiert werden können.

Aus der WO 01/58718 A1 ist eine Befestigungsmethode zur Sicherung zylinderförmigen Ladeguts in Form von Wickelrollen, insbesondere von Papierrollen, bekannt. In den rohrförmigen Wickelkern derartiger Rollen wird ein zapfenförmiges Befestigungselement eingesetzt, das zur Fixierung von Zugmitteln zum Niederzurren der Rollen dient. Die WO 01/58718 offenbart dabei sowohl eine Einzelbefestigung von stehend angeordneten Rollen als auch eine paketweise Verspannung einer Mehrzahl von Rollen. Darüber hinaus ist auch eine Sicherung liegend gelagerter Rollen beschrieben.

Aus der DE 78 10 909 U1 ist eine Haltekette zur Sicherung von Kraftfahrzeugen auf Autotransport-Schienenfahrzeugen bekannt. Dabei werden die Kraftfahrzeuge mit Hilfe von Ketten an typischerweise vier Rädern jeweils schräg nach außen am Boden des jeweiligen Wagons bzw. einer dort angeordneten Halteschiene festgezurrt. Die Kette ist mit einer Kettenschlaufe versehen, die über die obere Hälfte des Rades gezogen wird und somit ein Abrutschen der Kette von dem Rad verhindert. Die Kette ist wagonseitig an einem Klemmklotz mittels einer mit einem Handhebel betätigten Klemmschraube festlegbar, wobei der Klemmklotz selbst in Längsrichtung des Wagons in einer Befestigungsschiene verschiebbar gelagert ist. Die vorbekannte Methode ist in ihrer Anwendbarkeit auf Kraftfahrzeuge beschränkt, da als Befestigungspunkte an dem Ladegut lediglich die Räder des Kraftfahrzeugs verwendet werden.

Die DE 20 2006 015 899 U1 offenbart Sicherungsmittel für Schüttgutbehälter in Form so genannter "Oktabins". Dabei wird eine Anordnung einer Mehrzahl von Oktabins mit Hilfe von Gurten umfangsseitig umgriffen sowie kopfseitig übergriffen. Die so genannten Losenden der Gurte sind in Fahrtrichtung (Längsrichtung des Fahrzeugs) ausgerichtet. Aufgrund der Anbindung vertikal verlaufender Gurtabschnitte an solche, die horizontal bzw. schräg nach unten verlaufen, ist diese vorbekannte Sicherungstechnik vergleichsweise aufwendig beim Handling. Die Verwendung standardmäßiger Spanngurte scheidet aufgrund des komplizierten Gurtverlaufs aus.

Die WO 2004/094271 A2 beschreibt den Transport von Rollcontainern in Fahrzeugen. Die Besonderheit des vorbekannten Sicherungskonzepts besteht in einer speziellen Form eines Befestigungselements mit einem hakenförmigen Oberteil und einem schlaufenförmigen Unterteil, das zur Hindurchführung eines Spanngurtes dient. Das vorbekannte System ist prädestiniert zur Fixierung von Containern mit einer oben offenen Mulde, in die das hakenförmige Oberteil des Befestigungselements eingreift. Als besonders kritisch ist bei diesem Prinzip die Aufnahme von Kräften in vertikale Richtung anzusehen. Trotz des nach oben geschlossenen Hakens vermag der allein in horizontale Richtung verlaufende Spanngurt kaum jedwede Bewegung des Containers in vertikale Richtung zu unterbinden, insbesondere bei größeren Vertikalbeschleunigungen, wie sie bei Bodenwellen oder einer schlechten Wegstrecke auftreten.

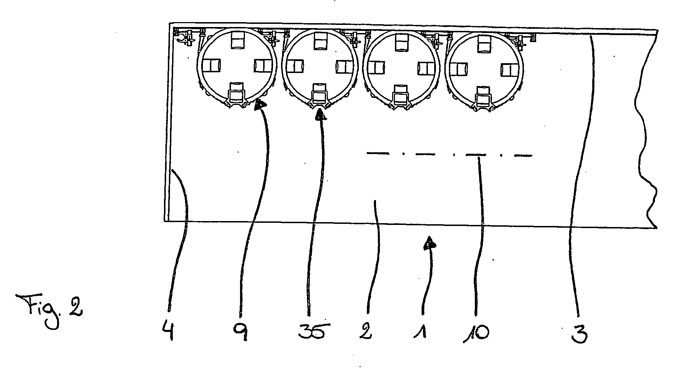

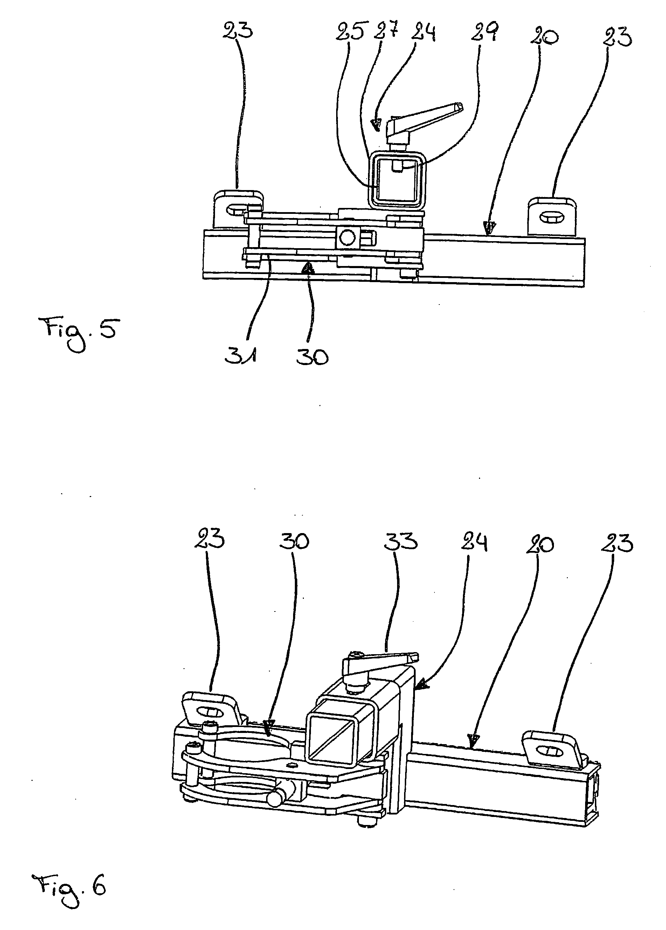

Die DE 203 02 929 U1 offenbart eine Vorrichtung zur Sicherung von Ladegütern auf eine Ladefläche, wobei die Ladegüter insbesondere von Rollbehältern gebildet sind. Mit Hilfe eines Schlittens werden die Rollbehälter an einer horizontal verlaufenden Schiene befestigt, die eine hinterschnittene, im Querschnitt T-förmige Nut aufweist. Das Ausführungsbeispiel gemäß der Figuren 2 bis 4 der vorgenannten Druckschrift beschreibt, wie an einem Halteelement zwei einander zugewandte Vertikalstreben (Rohre) zweier benachbarter Rollcontainer an der Halteschiene festgelegt werden. Die Ausführungsform gemäß Figur 5 beschreibt ein Halteelement, mit dem eine erste Rollcontainerstrebe in horizontale Richtung allseits formschlüssig festgelegt werden kann. Die Strebe eines benachbarten zweiten Rollcontainers kann in eine einseitig offene U-förmige Halterung eingesetzt werden.

Das Ausführungsbeispiel gemäß den Figuren 7 und 8 der DE 203 02 929 U1 offenbart eine Kombination aus einem Halteelement, das in einer Schiene verschiebbar ist und eine U-förmige Aufnahme für die Vertikalstrebe des Rollcontainers besitzt, und einem Spanngurt mit hakenförmigem Ende, das an einer einer Seitenwand abgewandten Vertikalstrebe formschlüssig angekoppelt ist. Auf diese Weise wird auch an der der Seitenwand des Laderaums abgewandten Seite des Rollcontainers eine Haltekraft in letzteren eingeleitet.

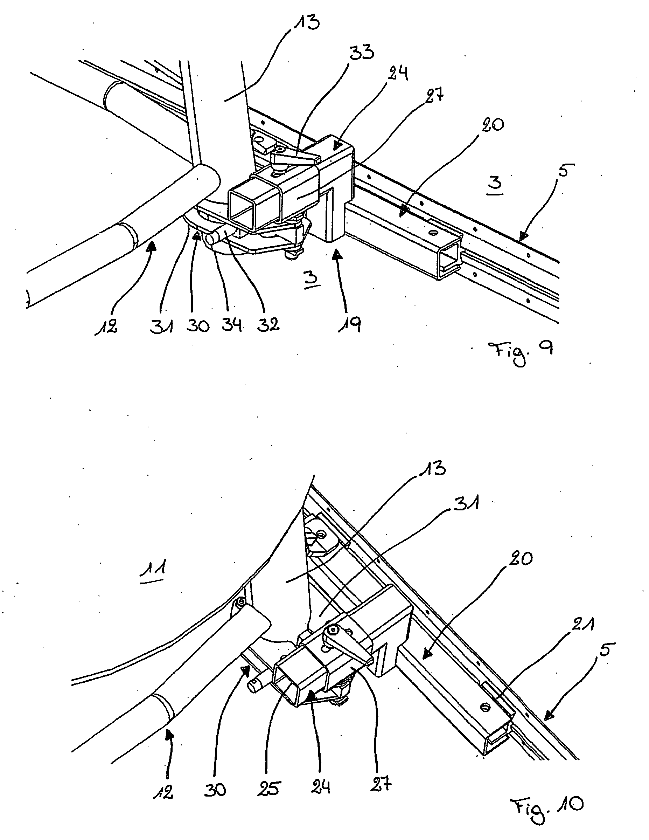

Eine weitere alternative Ausführungsform ist in den Figuren 9 bis 11 der DE 202 02 929 U1 gezeigt. Hier liegt eine kettenförmig aufgereihte Hintereinander-Anordnung von Rollcontainern vor: Beginnend mit einem "Anfangsteil" gemäß Figur 10, das wiederum in einer Schiene verfahrbar und festlegbar ist, wird eine Reihe von Rollcontainern angeordnet, wobei alle nachfolgenden Befestigungsschlitten mit voneinander weg gerichteten U-förmigen Aufnahmebereichen für jeweils zwei Vertikalstreben benachbarter Rollcontainer versehen sind. Ein in Figur 9 gezeigtes "Endteil" des vorbekannten Befestigungssystems besitzt wiederum - wie das "Anfangsteil" - nur eine einzige U-fölmige Aufnahme für eine Vertikalstrebe und ist zudem mittels eines Klinkenhebels in einer Fixierstellung der Rollcontainer-Reihe an der Halteschiene fixierbar.

### Aufgabe

Der Erfindung liegt die Aufgabe zugrunde, ein Verfahren zum Sichern eines Ladungsgegenstandes sowie ein Ladungssicherungssystem vorzuschlagen, mit dem sich eine besonders zuverlässige verlässige und den vorgenannten gesetzlichen Vorschriften entsprechende Sicherung eines Lebensmittelcontainers in einem Transportfahrzeug erzielen lässt.

### Lösung

Ausgehend von einem Verfahren der eingangs beschriebenen Art wird die Aufgabe erfindungsgemäß durch die Merkmale des Anspruchs 1 gelöst.

Durch die Führung des Zugmittels um das Oberteil herum werden trotz der hohen Schwerpunktlage insbesondere bei einem befüllten Container die in horizontale Richtung wirkenden Längs- und Querkräfte auf den Container zuverlässig aufgenommen und somit ein Kippen des Containers sicher vermieden. Mit einem Zugmittel mit einem einzigen Spannmechanismus oder aber mit einem aus zwei Teilen bestehenden Zugmittel mit zwei separaten Spannmechanismen lässt sich somit eine rationell zu realisierende Ladungssicherung jedes einzelnen Containers erreichen. Wesentlich für das Funktionsprinzip der erfindungsgemäßen Ladungssicherung der vorgenannten Art ist der Umstand, dass sowohl eine Haltekraft-Komponente in Richtung auf den Ladeboden wirkt, wohingegen eine andere Komponente in horizontale Richtung, d.h. auf die Wand des Transportfahrzeugs zu, vorliegt. Die von dem Zugmittel übertragene Haltekraft wirkt somit schräg nach unten in den Eckbereich, der von der Ladefläche und der davon ausgehenden Wand gebildet wird. Es liegt somit aufgrund der vertikalen, auf die Ladefläche zu gerichtete Haltekraftkomponente zum einen eine gewisse Ähnlichkeit mit dem Prinzip des Niederzurrens vor, bei dem durch Aufbringung einer senkrecht zur Ladefläche wirkenden Kraft, die Reibkraft zwischen dem Ladungsgegenstand und der Ladefläche erhöht wird. Aufgrund des sowohl gegenüber dem vertikalen als auch gegenüber dem horizontalen geneigten Verlauf des Zugmittels in einem Endabschnitt vor der Befestigungsschiene liegen aber auch Merkmale des Schrägzurrens vor. Es handelt sich dabei jedoch nicht um eine klassische Schrägzurrung, bei der nach der Definition immer mindestens acht Zugmittel erforderlich sind, da dies bei einer rationellen Unterbringung einer Mehrzahl von Container in dem Transportfahrzeug allein aus Platzgründen möglich ist. Es liegt somit eine abgewandelte Form des Schrägzurrens vor, die einen - in Längsrichtung des Transportfahrzeugs betrachtet - asymmetrischen Verlauf besitzt, da die horizontale Komponente der durch Zugmittel übertragene Haltekraft jeweils nur auf die Wand zu wirkt und nicht auch in die entgegen gesetzte Richtung. Die Art und Weise der Verzurrung kann daher kurz als "asymmetrisches Schrägzurren" bezeichnet werden.

Unter einer "ladeflächennahen" Befestigungsschiene im Sinne dieser Anmeldung soll ein vertikaler Abstand derselben von der Ladefläche von maximal 0,30 m, vorzugsweise maximal 0,20 m, verstanden werden.

Um unabhängig von den konkreten Abmessungen der jeweils verladenen Container sowie ohne Rücksicht auf die konkrete Abstellposition die Ladungssicherung einfach durchführen zu können, kann ein Ende des Zugmittels mit einem Befestigungsschlitten des Halteelements verbunden werden, der in einer Nut der Befestigungsschiene in deren Längsrichtung verschoben und in einer Befestigungsposition an der Befestigungsschiene festgelegt wird. Das reversible Festlegen und wieder Lösen des Befestigungsschlittens in oder an der Befestigungsschiene ermöglicht eine variable Anpassung an die gerade eingenommene Abstellposition des Containers. Dies ist insbesondere vor dem Hintergrund sehr komfortabel, dass ein befüllter Container mit einem Gewicht von ca. 1 Tonne nicht ohne technische Hilfsmittel (Flurförderfahrzeuge) aus seiner Abstellposition verschoben und selbst unter Verwendung solcher Hilfsmittel kaum präzise positioniert werden kann.

Um im Bereich des Oberteils des Containers eine gute Lagesicherung des Zugmittelverlaufs zu erhalten und auch unter Belastung ein unbeabsichtigtes Verrutschen des Zugmittels zu verhindern, kann das Zugmittel mit einem Adapterelement verbunden werden, das formschlüssig mit dem Oberteil des Containers, vorzugsweise mit einem über eine Mantelfläche des Oberteils vorstehenden Anbauteil, gekoppelt wird. Bei einer Vielzahl von Lebensmittelcontainern der eingangs beschriebenen Bauart sind an der Oberseite des Oberteils so genannte Stapelpratzen pratzen vorhanden, die dazu dienen, dass auf einem auf dem Boden stehenden unteren Container ein weiterer, oberer Container abgestellt werden kann und zwar so, dass dessen Standfüße auf den Stapelpratzen des unteren Containers aufstehen. Da es sich bei den Stapelpratzen um exponierte aber stabile, hervorragende Bauteile handelt, eignen sich diese sehr gut zur Ankopplung eines Adapters, der wiederum als Führungs- oder Fixierelement für das Zugelement dienen kann. Es ist somit über eine Formschlussverbindung eine sehr zuverlässige Kraftübertragung zwischen Container-Oberteil und Zugmittel ermöglicht.

Die Sicherheit gegen ein Umkippen bzw. Verrutschen des gesicherten Containers lässt sich weiter erhöhen, wenn
- der größte horizontale Abstand des Zugmittels von der zugeordneten Seitenwand im Bereich des Oberteils des Containers größer als 50 %, vorzugsweise zwischen 90 % und 100 %, des Durchmessers oder der senkrecht zu der Seitenwand gemessenen Breite des Containers ist und/oder
- der größte vertikale Abstand des Zugmittels von der Ladefläche größer als 50 %, vorzugsweise zwischen 70 % und 100 %, der Höhe des Containers ist und/oder
- in einer Draufsicht auf den Container betrachtet - ein Umschlingungswinkel des Zugmittels um den Container mindestens 90°, vorzugsweise mindestens 120°, vorzugsweise mindestens 150° beträgt.

Der Umschlingungswinkel sollte jedoch einen Betrag von 180° nicht wesentlich überschreiten, da ansonsten zum einen die Fixierung der Enden des Zugmittels an der Befestigungsschiene erschwert und zum anderen die Geometrie der Krafteinleitung gegenüber kleineren Winkeln wieder verschlechtert wird.

Eine vorteilhafte Ausgestaltung besteht darin, dass das Unterteil des Containers mittels mindestens eines Kopplungselements des Halteelements formschlüssig gekoppelt und der Container insgesamt starr mit der Befestigungsschiene verbunden wird, wobei zwar ein Abstand des Kopplungselements des Halteelements von der zugeordneten Seitenwand eingestellt und das Kopplungselement in einer Kopplungsposition an dem Halteelement festgelegt wird.

Auch diese Variante des Verfahrens nutzt die ladeflächennah angebrachte Befestigungsschiene zur Ableitung der Haltekräfte in das Transportfahrzeug. Der Kraftangriff am Container selbst erfolgt nach dieser Verfahrensvariante jedoch nicht am Oberteil sondern am Unterteil, wo der Gestellcharakter dazu genutzt wird, eine Formschlussverbingung zu einem Kopplungselement des Halteelements herzustellen. Die starre Verbindung zwischen Befestigungsschiene und dem Unterteil des Containers vermeidet die gemäß der VDI-Richtlinie 2700 bis zu gewissen Grenzwerten der Beschleunigung bei Vorwärts- bzw. Rückwärtsfahrt nicht zulässigen Verlagerungen des gesicherten Ladungsgegenstandes, wobei aufgrund der Starrheit der Verbindung grundsätzlich pro Container ein einziges Kopplungs- und Halteelement ausreichend ist. Um die Sicherheit weiter zu erhöhen, kann es je nach Beladungsgeometrie jedoch zweckmäßig sein, an zwei zueinander beabstandeten Stellen jeweils ein Kopplungs- und Halteelement vorzusehen, um die im Belastungsfall von dem Ladungsgegenstand ausgehenden Kräfte und Momente noch besser in die Befestigungsschiene und damit in die Struktur des Fahrzeugs ableiten zu können. Auch in Fällen, in denen ein Container mit seinem Oberteil nicht unmittelbar an die zugeordnete Seitenwand anstößt kann durch entsprechende horizontale Anpassung der Position des Kopplungselements auf einfache Weise eine wirksame Ladungssicherung erzielt werden, ohne eine Verschiebung des Containers nach seinem Abstellen vornehmen zu müssen.

Zweckmäßiger Weise wird dabei das Halteelement an einem Befestigungsschlitten angeordnet und kann dann zusammen mit letzterem entlang der Befestigungsschiene verschoben und in einer Befestigungsposition an der Befestigungsschiene festgelegt werden. Auf die vorgenannte Weise ist eine leichte Anpassung der Ladungssicherung an die jeweilige Abstellposition eines Containers im Laderaum möglich. Es ist nämlich bei den hier in Rede stehenden Containern nicht möglich, diese - nachdem sie z.B. von einem Gabelstapler an dem gewünschten Ort auf der Ladefläche abgestellt wurden - manuell bzw. mittels Muskelkraft nach zu justieren, um insbesondere eine exakte Positionierung in Bezug auf ein Halteelement zu erreichen. Vielmehr ist es der weitaus vorteilhaftere Weg, das Halteelement zu dem Ladungsgegenstand hin zu bewegen.

In verfahrenstechnischer Hinsicht wird die zugrunde liegende Aufgabe schließlich noch dadurch gelöst, dass
- auf einer der Stirnwand des Transportfahrzeugs zugewandten Seite des Containers wird ein erstes Klemmelement und auf einer der Stirnwand abgewandten Seite wird ein zweites Klemmelement angeordnet, wobei beide Klemmelemente starr mit der Befestigungsschiene verbunden werden
- der Container wird in eine Richtung parallel zu der Längsachse des Transportfahrzeugs zwischen den Klemmelementen eingespannt, indem die wirksame Länge mindestens eines der Klemmelemente vergrößert wird.

Die erfindungsgemäße Verspannung bzw. Verklemmung eignet sich insbesondere bei der Reihenanordnung von Containern, wobei diese vorzugsweise mit ihren Oberteilen mit der zugeordneten Seitenwand des Transportfahrzeugs in Kontakt stehen sollten, um in die betreffende Richtung eine besonders sichere Querkraftableitung zu gewährleisten.

Sinnvoller Weise sollten die Klemmelemente von einem Ausgangszustand, in dem sich zwei relativ zueinander bewegliche Elementteile in einer Lösestellung befinden, in einen Klemmzustand überführt werden, in dem die Elementteile weiter als in dem Lösezustand voneinander entfernt sind, wobei anschließend die Elementteile in dem Klemmzustand relativ zueinander fixiert werden. Die Überführung in den Klemmzustand kann z.B. mittels einer SpindelMutter-Kombination oder mittels eines Exzenterwerkzeugs erfolgen.

Vorzugsweise wird beim Spannen der Klemmelemente ein Formschluss zwischen diesen und den jeweiligen Unterteilen der Container hergestellt, wodurch insbesondere Bewegungen quer zu der Längsachse des Transportfahrzeugs sowie Kippbewegungen um die Längsachse sicher vermieden werden. Selbstverständlich werden durch die Verspannung an sich auch bereits Längskräfte sowie Kippmomente um eine horizontale, quer zur Längsachse verlaufende Drehachse sicher aufgenommen.

In vorrichtungstechnischer Hinsicht wird die zugrunde liegende Aufgabe durch die Merkmale des Anspruchs 11 gelöst.

Dabei kann zur Verhinderung des Verrutschens des Zugmittels unter Belastung ein Adapterelement in Form einer Adapterplatte vorgesehen sein, die auf ein über eine Mantelfläche des Oberteils des Containers vorstehendes Anbauteil formschlüssig aufsetzbar ist und das mit einer Durchführöffnung für ein Zugmittel versehen ist.

Eine in vorrichtungstechnischer Hinsicht vorteilhafte Lösung, besteht darin, dass
- ein Kopplungselement des Halteelements formschlüssig mit dem Unterteil des Containers und dieser insgesamt starr mit der Befestigungsschiene verbindbar ist, wobei ein Abstand des Kopplungselements des Halteelements von der zugeordneten Wand einstellbar und das Kopplungselement in einer Kopplungsposition an dem Halteelement festlegbar ist.

Schließlich besteht eine vorteilhafte vorrichtungstechnische Lösung der Aufgabenstellung auch in
- zwei auf entgegen gesetzten Seiten - in Richtung der Längsachse des Transportfahrzeugs betrachtet - des Containers angeordneten, in ihrer wirksamen Länge veränderlichen und an der Befestigungsschiene befestigten Klemmelementen, zwischen denen der Container in eine Richtung parallel zu der Längsachse des Transportfahrzeugs einspannbar ist.

Dabei sollten vorzugsweise die Klemmelemente von einem Ausgangszustand, in dem zwei Elementteile sich in einer Lösestellung befinden, in einen Klemmzustand überführbar sein, in dem die Elementteile weiter als in dem Lösezustand voneinander entfernt sind, wobei die Elementteile in dem Klemmzustand relativ zueinander fixierbar sind.

Ferner sollten die Klemmelemente an entgegengesetzten Enden jeweils formschlüssig mit dem Unterteil des zugeordneten Containers derart koppelbar sein, dass die Verlagerung der Container quer zu der Längsachse des Transportfahrzeugs unterbunden ist.

Eine einfache Anpassung des Ladungssicherungssystems an die jeweilige Abstellposition eines Containers lässt sich durch mindestens einen Befestigungsschlitten erzielen, der entlang der Befestigungsschiene verschiebbar ist und
- der mindestens einen Anschluss für ein Zugmittel aufweist und/oder
- an dem das Halteelement angeordnet ist und/oder
- an dem das Klemmelement angeordnet ist.

Gemäß einer besonders vorteilhaften Ausgestaltung des Ladungssicherungssystems ist vorgesehen, dass die Befestigungsschiene in ihrer Längsrichtung verteilt angeordnete Ausnehmungen aufweist, in die mindestens ein Hintergreifelement des Befestigungsschlittens einsetzbar ist, wodurch ein Formschluss zwischen der hinterschnittenen Befestigungsschiene und dem Befestigungsschlitten erzeugbar ist. Vorzugsweise sollten an dem Befestigungsschlitten zwei Hintergreifelemente angeordnet sein, die sich jeweils an den entgegengesetzten Enden des Befestigungsschlittens befinden.

Wenn das vorzugsweise einen Befestigungsschlitten umfassende Halteelement einen senkrecht zu der Seitenwand des Transportfahrzeugs verlaufenden Ausleger besitzt, an dem entlang ein mit dem Kopplungselement versehenes Schiebeelement verschiebbar ist, lässt sich auch bei zufallsbedingten Unterschieden in der Anordnung der Container quer zur Längsachse des Transportfahrzeugs eine einfache Ladungssicherung erreichen.

Schließlich ist nach der Erfindung noch vorgesehen, dass das Transportfahrzeug einen Kühlkoffer oder einen Kühlauflieger aufweist und die an den gegenüber liegenden Seitenwänden angeordneten Befestigungsschienen jeweils an einem innerhalb der zugeordneten Seitenwand befindlichen und mit einem die Ladefläche bildenden Laderaumboden und/oder einer Fahrzeug-Tragstruktur verbundenen Verstärkungselement, vorzugsweise in Form eines sich über die gesamte Länge der jeweiligen Seitenwand erstreckenden Verstärkungsblechs, befestigt sind.

### Ausführungsbeispiel

Die Erfindung wird nachfolgend anhand zweier Ausführungsbeispiele eines Ladungssicherungssystems, die in der Zeichnung dargestellt sind, näher erläutet.

Es zeigt:
- Fig. 1:: Einen vertikalen Längsschnitt durch ein schematisch dargestelltes Transportfahrzeug mit Blick auf eine Reihe von Containern,
- Fig. 2:: wie Fig. 1, jedoch in einem horizontalen Längsschnitt,
- Fig. 3:: eine perspektivische Ansicht einer Reihe von Containern,
- Fig. 4 bis 7:: verschiedene Ansichten eines Halteelements mit einem Befestigungsschlitten,
- Fig. 8:: eine perspektivische Ansicht eines Unterteils eines Containers mit angekoppeltem Halteelement,
- Fig. 9 und 10:: wie Fig. 8, jedoch in einer vergrößerten Darstellung,
- Fig. 11:: eine Draufsicht auf ein Adapterelement,
- Fig. 12:: eine vergrößerte Ansicht einer Befestigungsschiene,
- Fig. 13:: einen Querschnitt durch die Befestigungsschiene nach Figur 12,
- Fig. 14:: eine perspektivische Ansicht eines Klemmelements,
- Fig. 15:: eine Seitenansicht des Klemmelements gemäß Figur 14,
- Fig. 16:: eine Vorderansicht des Klemmelements gemäß Figur 14,
- Fig. 17:: eine perspektivische Ansicht eines Unterteils eines Containers mit daran positioniertem Klemmelement,
- Fig. 18:: eine Draufsicht auf eine Reihe von Containern mit einer Mehrzahl positionierter Klemmelemente,
- Fig. 19:: eine Seitenansicht einer Reihe von Containern mit positionierten Klemmelementen sowie verzurrten Zugmitteln und
- Fig. 20:: wie Figur 19, jedoch in einer Draufsicht.

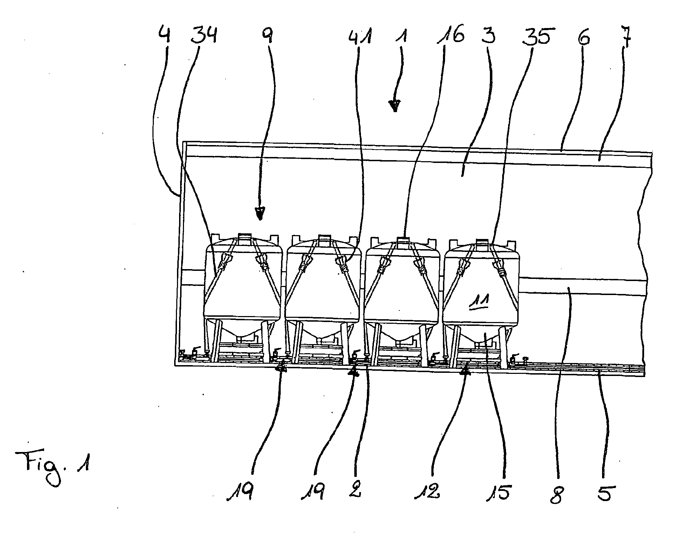

Bei einem in den Figuren 1 und 2 lediglich schematisch dargestellten Transportfahrzeug 1 handelt es sich um einen Kühlauflieger, von dem der Einfachheit halber lediglich der Aufbau und nicht auch das Fahrwerk oder sonstige Einrichtungen dargestellt sind. Der Aufbau umfasst eine Ladefläche 2 sowie zwei senkrecht hierzu ausgerichtete Seitenwände 3, von denen lediglich eine sichtbar ist. Im rechten Winkel zu den Seitenwänden 3 verläuft eine vordere, dem Zugfahrzeug zugewandte Stirnwand 4. An dem entgegengesetzten hinteren Ende wird der abgebrochen dargestellte Laderaum des Aufliegers von nicht dargestellten Flügeltüren abgeschlossen.

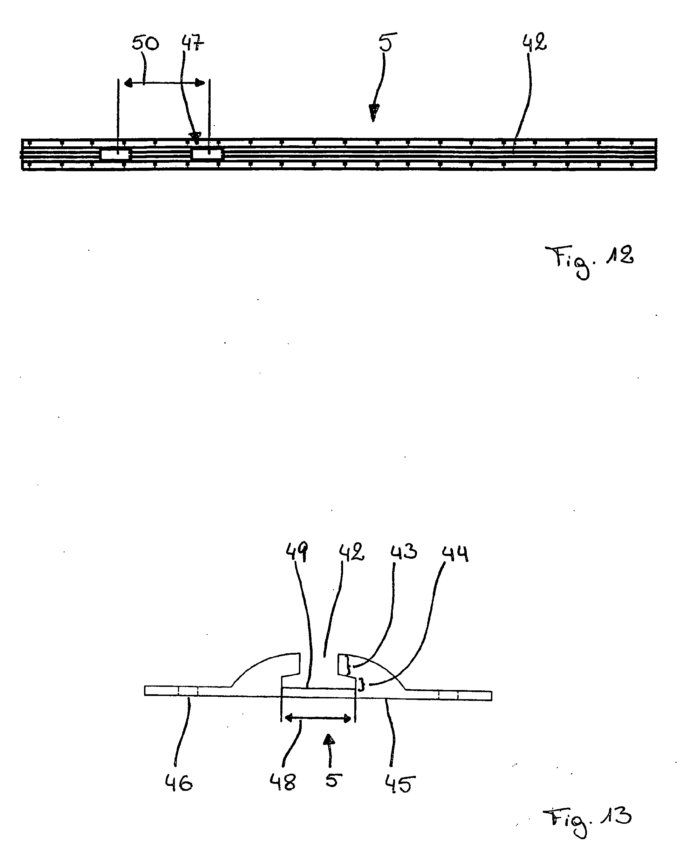

Unmittelbar oberhalb der Ladefläche 2 ist an jeder der beiden Seitenwände 3 eine in deren Längsrichtung verlaufende und sich über die gesamte Länge der jeweiligen Seitenwand 3 erstreckende Befestigungsschiene 5 angeordnet. Der Abstand der "bodennah" angeordneten Befestigungsschiene 5 von der Ladefläche 2 sollte maximal 300 mm, vorzugsweise maximal 200 mm, weiter vorzugsweise maximal 100 mm betragen. Die aus metallischem Material, insbesondere aus stranggepresstem Aluminiumprofil, bestehende Befestigungsschiene 5 ist mit einem nicht sichtbaren Verstärkungsblech, das sich im Inneren der Seitenwand 3 befindet, fest verbunden, wobei das Verstärkungsblech wiederum mit einem die Ladefläche 2 bildenden Laderaumboden bzw. mit einer darunter befindlichen Fahrzeug-Tragstruktur verbunden ist. Bei dem Transportfahrzeug 1 handelt es sich um einen Kühlauflieger, d.h. insbesondere auch die in Sandwich-Struktur aufgebauten Seitenwände 3 bestehen aus einer jeweils inneren und äußeren Paneele aus glasfaserverstärktem Kunststoffmaterial und einem dazwischen befindlichen und mit den Paneelen verklebten Isolationsschaum. In Figur 1 ist noch ersichtlich, dass sich zum einen unmittelbar unter einer Laderaumdecke 6 und zum anderen in einem Abstand von ca. 1,20 m oberhalb der Ladefläche 2 jeweils ein Verstärkungsstreifen 7, 8 befindet, der aus einem 3 mm starken und ca. 200 mm breitem Aluminiumblech besteht und der mit der inneren Paneele der Seitenwand 3 verklebt ist. Der Aufbau der Befestigungsschiene 5 ist weiter unten mit Bezug auf die Figuren 12 und 13 näher erläutert.

Aus den Figuren 1 und 2 lässt sich entnehmen, dass eine Reihe von Containern 9 unmittelbar angrenzend an die Seitenwand 3 stehend auf der Ladefläche 2 in dem Transportfahrzeug 1 untergebracht sind. Bei vollständiger Beladung des Fahrzeugs enthält eine Reihe bis zu 13 Container, wobei die Beladung des Transportfahrzeugs 1 zu einer mittigen Längsachse 10 des Fahrzeugs symmetrisch erfolgt, d.h. auch an der gegenüber liegenden Seitenwand 3 befindet sich eine Reihe aus insgesamt bis zu 13 Containern 9, die in Figur 2 der Einfachheit halber jedoch nicht dargestellt ist. Zwischen den beiden Containerreihen befindet sich ein Freiraum in Form eines etwa 400 mm breiten Mittelgangs. Es ist jedoch auch möglich, mit dem Ladungssicherungssystem einzelne Container 9 zu sichern, ohne dass diese sich berühren müssten, da die Sicherung nicht auf einem Zusammenwirken benachbarter Container 9 basiert, sondern jeden einzelnen Container 9 gegenüber der Ladefläche 2 und der Seitenwand 3 festlegt. Auf diese Weise ist von dem Transport eines einzelnen Containers 9 an beliebige Stelle der Ladefläche 2, über eine Mehrzahl verteilt auf der Ladefläche 2 angeordneter Container 9 (mit eventuell zwischen den Containern 9 angeordnetem anderem Ladegut), bis hin zu einer Anordnung der Container 9 in zwei vollständigen Reihen eine Vielzahl von Aufstellungsvarianten denkbar.

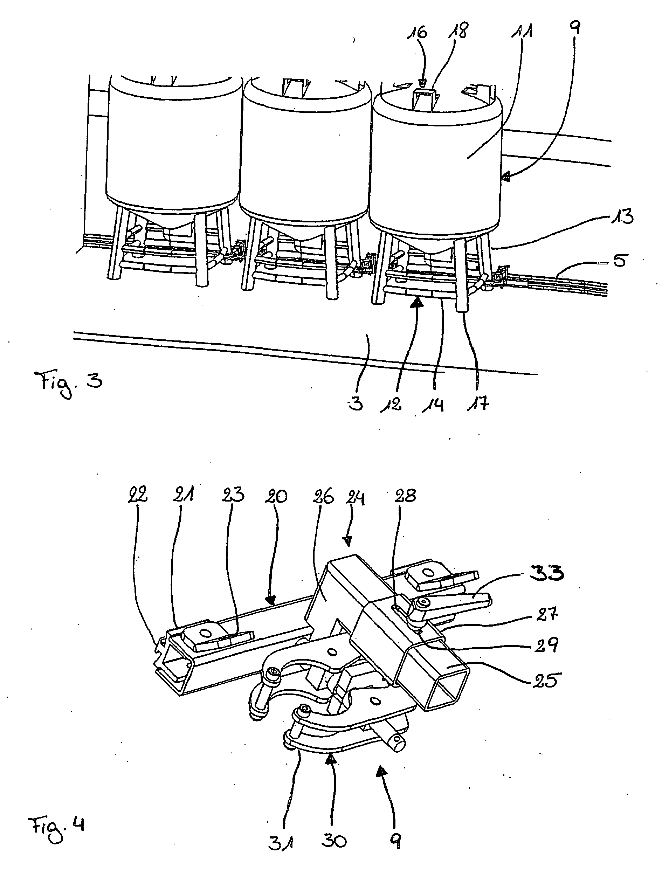

Die Container 9 sind gänzlich aus Edelstahl gefertigt und dienen zur Aufnahme fließfähiger Lebensmittel, insbesondere von Fruchtzubereitungen für die Molkereiindustrie. Wie sich aus Figur 3 ergibt, besitzen die Container 9 ein zylindrisches Oberteil 11, das einen befüllbaren Hohlraum einschließt, und ein gestellartiges Unterteil 12, das aus miteinander und mit dem Oberteil verschweißten Streben besteht und zwar aus vier leicht schräg nach außen verlaufenden Beinen 13 und jeweils dazwischen verlaufenden Horizontalstreben 14, die teilweise in zwei Reihen übereinander angeordnet sind.

An der Unterseite des Oberteils 11 ist ein Auslauftrichter 15 ausgeformt, der an seinem tiefsten Punkt in einer nicht mehr dargestellten Auslaufarmatur endet. An der Oberseite des Oberteils 11 befindet sich ein nicht dargestellter Domdeckel, durch den der Container 9 befüllbar und reinigbar ist. Die Oberseite des Containers 9 ist darüber hinaus mit vier jeweils um einen Winkel von 90° versetzt angeordneten Stapelpratzen 16 versehen, bei denen es sich im Wesentlichen um U-förmig gekantete und mit der Oberseite des Oberteils 11 verschweißte Blechstücke handelt. Die Stapelpratzen 16 dienen dazu, dass während der Lagerung der Container 9 (nicht jedoch während des Transports) ein Übereinanderstapeln der Container 9 ermöglicht wird. Hierzu werden die Horizontalstreben 14 eines oberen Containers 9 auf ungefähr ebenen Oberseiten 18 der Stapelpratzen 16 des darunter befindlichen Containers 9 angeordnet, wodurch auch ein seitliches Abrutschen des oberen Containers 9 verhindert wird.

Ein wichtiges Element für die Sicherung der Container 9 in dem Transportfahrzeug 1 ist das in den Figuren 4 bis 7 dargestellte Halteelement 19. Das Halteelement 19 dient zum einen zur formschlüssigen Verbindung mit der Befestigungsschiene 5 und zum anderen zur ebenfalls formschlüssigen Kopplung mit einem Bein 13 des Unterteils 12 des Containers 9. Darüber hinaus besitzt das Halteelement 19 Aufnahmepunkte zur Ankopplung von Zugmitteln, mit denen die Container 9 auf die Ladefläche 2 niedergezurrt werden können. Die Anordnung der Zugmittel wird weiter unten näher beschrieben. Im Einzelnen besitzt jedes Halteelement 19 folgenden Aufbau und folgende Funktionalität:

Das Halteelement 19 ist mit einem lang gestreckten Befestigungsschlitten 20 versehen, der aus einem im Querschnitt U-förmigen Profilstahl besteht, in den von seiner offenen Rückseite her zwei Hintergreifelemente 21 eingesetzt und befestigt sind, wobei jedes Hintergreifelement 21 mit einem im Querschnitt schwalbenschwanzförmig geformten Eingriffkörper 22 ausgestattet ist, der in eine daran angepasste und hinterschnittene Nut in der Befestigungsschiene 5 formschlüssig eingreift (vgl. auch Figuren 12 und 13). An den beiden Enden des Befestigungsschlittens 20 ist das Halteelement 19 darüber hinaus mit jeweils einer Befestigungsöse 23 versehen, die zur Anbindung eines Zugmittels, insbesondere eines an dessen freien Ende befindlichen Hakens, dient.

Ferner ist das Halteelement mit einem winkelförmigen Ausleger 24 versehen, der ein horizontal verlaufendes Führungsteil 25 und ein vertikal verlaufendes und mit dem Befestigungsschlitten 20 verbundenes Verbindungsteil 26 besitzt. Das Führungsteil 25 und das Verbindungsteil 26 bestehen jeweils aus einem im Verbindungsbereich miteinander verschweißten Quadratrohr.

An dem Führungsteil 25 des Auslegers 24 ist ein muffenförmiges Schiebeelement 27 verschiebbar gelagert, wobei der Verschiebeweg durch ein Langloch 28 in dem Schiebeelement 27 und einen Fixierbolzen 29, der durch das Führungsteil 25 hindurch geführt ist, begrenzt ist. Mit dem Schiebeelement 27 verbunden ist ein Kopplungselement 30, das als Halteklammer mit zwei gegeneinander verschwenkbaren Backen 31 ausgeführt ist. Die beiden Backen 31 sind in den Figuren 4 bis 7 in einer Schließstellung dargestellt, in der die Backen 30 nah beieinander angeordnet sind und ein Bein 13 eines Containers 9 formschlüssig umgreifen können. Mit Hilfe einer Spindel 32, die beispielsweise mittels einer Kurbel, eines Schlüssels oder eines angetriebenen Schraubwerkzeugs drehbar und in einem Endabschnitt mit einem Links-und einem anderen Endabschnitt mit einem Rechtsgewinde versehen ist, lassen sich die Backen 30, die jeweils mit einem mit dem Gewindeabschnitt der Spindel 32 korrespondierenden Mutterelement versehen sind, auf und zu schwenken. Die Fixierung des Schiebeelements 27 auf dem Führungsteil 25 des Auslegers 24 erfolgt mit Hilfe eines SchnellSpannschlosses 33 mit Knebelgriff.

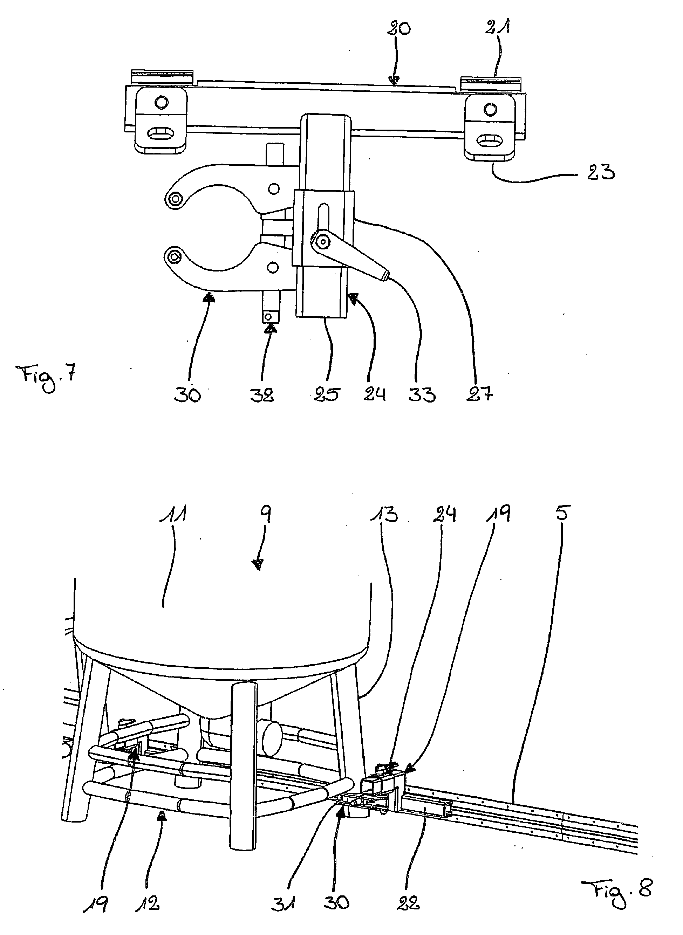

Besonders gut erkennbar ist das Zusammenwirken eines Halteelements 19 mit dem Bein 13 eines Unterteils 12 eines Containers 9 einerseits und mit der Befestigungsschiene 5 andererseits in den Figuren 8 bis 10. Die Backen 31 des Kopplungselements 30 umgreifen das Bein 13 von zwei Seiten und bilden so eine Formschlussverbindung für den auf der Ladefläche aufstehenden Container 9. Das Schiebeelement 27 ist an dem Ausleger 24 fixiert, in dem der SchnellSpannschloss 33 verriegelt wurde. Der Befestigungsschlitten 20 kann durch Klemmschrauben, die in Gewindebohrungen in dem U-Profil eingeschraubt sind und sich an der Vorderseite der Befestigungsschiene 5 abstützen, in der passenden Position an der Befestigungsschiene 5. Die Fixierung des Beins 13 des Containers 9 erfolgt nicht nur in horizontale Längs- und Querrichtung des Transportfahrzeugs 1, sondern auch gegen Kippen um eine horizontale Längs- oder Querachse, da das Bein 13 zur Ladefläche 2 hin unter einem Winkel zur Vertikalen verläuft.

Gezeigt ist in den Figuren 1 bis 3 sowie 9 und 10 lediglich die Fixierung eines Containers mittels eines einzigen Halteelements 19. Unter normalen Umständen ist dies ausreichend. Bedarfsweise können jedoch auch ohne weiteres beide der Seitenwand 3, d.h. der Befestigungsschiene 5, zugewandte Beine 13 eines Containers 9 mit jeweils einem eigenen Halteelement 19 gesichert werden.

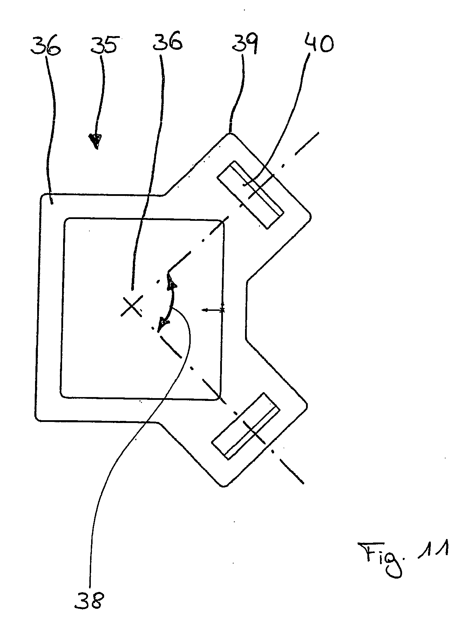

Aus den Figuren 1 und 2 lässt sich entnehmen, wie die Container 9 jeweils durch Zugmittel 34 gegen Verrutschen und Umkippen im Transportfahrzeug 1 gesichert sind. Jeder Container 9 ist mit Hilfe von zwei Zugmitteln 34 niedergezurrt, wobei jedes Zugmittel 34, bei dem es sich um einen handelsüblichen Spanngurt entsprechender Festigkeit handelt, von einem Halteelement 19 ausgeht, und damit mittelbar mit der Befestigungsschiene 5 und somit mit dem Transportfahrzeug 1 an einem ladeflächennahen Punkt verbunden ist. Darüber hinaus schließt jedes Zugmittel 34 mit seinem dem Halteelement 19 gegenüber liegenden anderen freien Ende an einem Adapterelement 35 an, das in Figur 11 in vergrößerter Darstellung gezeigt ist. Jedes Adapterelement 35 besteht aus einem Ausschnitt aus einem Stahlblech, wobei jedes Adapterelement 35 eine Ausnehmung 36 aufweist, mit der es im Bereich einer Stapelpratze 16 von oben auf das Oberteil 11 eines Containers 9 aufsetzbar ist, wodurch die seitlichen äußeren Umrisse der Stapelpratze 16 von einem Adapterrahmen 36 formschlüssig umgriffen werden. An zwei unter einem Winkel 38 von 90° versetzt zueinander verlaufenden Adapterarmen 39 ist jeweils eine Befestigungsöse 40 für ein Ende des Zugmittels 34 angeordnet. Mit einer in den Figuren nicht dargestellten Schlaufe des Zugmittels 34 verläuft das zugeordnete Ende des Zugmittels 34 durch die Befestigungsöse 40 hindurch. In einem Überlappungsbereich der Schlaufe sind zwei Lagen des Zugmittels 34 miteinander vernäht.

Wie insbesondere aus den Figuren 1 und 2 ersichtlich ist, verlaufen die zwei einer einem Adapterelement 35 zugeordneten Zugmittel 34 vom Bereich der Stapelpratze 16 schräg nach unten und vorne bzw. hinten an der äußeren Mantelfläche des Oberteils 11 des Containers 9 entlang und enden jeweils an einer Befestigungsöse 23 zweier benachbarter Halteelemente 19, die bekanntlich formschlüssig mit der Befestigungsschiene 5 gekoppelt sind. Aus der Draufsicht gemäß Figur 2 ergibt sich, dass ein Umschlingungswinkel beider als Einheit betrachteter Zugmittel 34 eines Containers 9 etwas mehr als 180° beträgt. Dies liegt daran, dass das untere Ende eines Zugmittels 34 mit Hilfe eines endseitig angeordneten Hakens in die hintere Befestigungsöse 23 eines in Fahrtrichtung vor dem Container 9 angeordneten Halteelements eingreift, wohingegen das untere Ende des anderen Zugmittels 34 wiederum mittels eines Hakens in die vordere Befestigungsöse 23 des hinter dem Container 9 angeordneten Halteelements 19 eingreift. Bei der in den Figuren dargestellten Sicherungsvariante ist lediglich das der Seitenwand 3 zugewandte hintere Bein 13 des Containers 19 mit dem Kopplungselement 30 des hinter dem Container 9 angeordneten Halteelements 19 verbunden. Somit dient das vor dem Container 9 befindliche Halteelement 19 lediglich zur Ankopplung eines Zugmittels 34 und nicht auch zur Herstellung einer weiteren Formschlussverbindung mittels eines Kopplungselements 30.

Aus Figur 1 wird deutlich, dass der Kraftangriffspunkt der Zugmittel - in vertikale Richtung betrachtet - sich nahezu an der Oberseite des Oberteils 11 eines Containers 9 befindet. Kräfte, die ein Kippmoment um eine horizontale Achse induzieren wollen, und zwar sowohl um eine in Längsrichtung als auch eine in Querrichtung des Transportfahrzeugs 1 verlaufende Achse, lassen sich durch eine derart hohe Ankopplung der Zugmittel 34 an den Container 9 besonders gut ableiten. Besonders vorteilhaft ist darüber hinaus, dass die Befestigungsösen 40 an den Adapterarmen 39 des Adapterelements 35 sich in einem möglichst großen horizontalen Abstand von der zugeordneten Seitenwand 3 befinden, so dass sehr wirksam ein Wegkippen der Container 9 von der zugeordneten Seitenwand 3 unterbunden werden kann. Durch den steil nach oben gerichteten Verlauf der Zugmittel 34 wird eine große Komponente der Spannkräfte auch in vertikale Richtung über die Beine 13 des Containers 9 in die Ladefläche 2 abgeleitet. Aus diesem Grunde muss nur ein vergleichsweise geringer Anteil der horizontalen Querkräfte in die zugeordnete Seitenwand 3 abgeleitet werden, was aufgrund von deren geringer Belastbarkeit als sehr positiv anzusehen ist.

Die Figuren 1 und 2 lassen erkennen, dass jedes Zugmittel 34 mit Hilfe eines handelsüblichen Spannschlosses nach dem Ratschen-Prinzip gespannt wird. Aus Gründen eines möglichst rationellen Ablaufs des Ladungssicherungsvorgangs sind jeweils ein Adapterelement 35 und zwei daran angeschlossene Zugmittel 34 zu einer Einheit verbunden, so dass zum einen das Risiko einer Fehlmontage reduziert und zum anderen die Gefahr vermindert wird, dass Einzelteile des Ladungssicherungssystems unauffindbar verlegt werden. Die Ladungssicherung selbst läuft in Verbindung mit der Beladung des Transportfahrzeugs 1 typischerweise wie folgt ab:

Ein erstes Halteelement 19 wird unmittelbar im Anschluss an die Stirnwand 4 in der Befestigungsschiene 5 fixiert. Anschließend wird ein erster Container 9 so positioniert, dass er einerseits an die zugeordnete Seitenwand 3 anschließt und andererseits in einer Seitenansicht (Figur 1) die vordere Umrisslinie des Oberteils 11 ungefähr lotrecht oberhalb der Befestigungsöse 23 des vordersten Halteelements 19 angeordnet ist. Anschließend wird das zweite Halteelement 19 so in der Halteschiene 5 positioniert, dass sein Kopplungselement 30 das Bein 13 des Containers 9 umgreifen kann. Durch Verdrehung der Spindel 32 wird das Kopplungselement 30 in Form der Halteklammer geschlossen, nachdem zuvor das Schiebeelement 27 an dem Ausleger 24 passend eingestellt und fixiert wurde. Darüber hinaus wird das Halteelement 19 an der entsprechenden Stelle in der Befestigungsschiene 5 fixiert. Nunmehr können die dem ersten Container 9 zugeordneten zwei Zugmittel 34 angebracht werden, wobei deren jeweils untere Enden zum einen mit der hinteren Befestigungsöse 23 des vordersten Halteelements 19 und zum anderen mit der vorderen Befestigungsöse 23 des nächst hinteren Halteelements 19 verbunden wird. Im Zuge der Verspannung der Zugmittel 34 werden über die Krafteinleitung in die Befestigungsösen 23 der Halteelemente 19 letztere im Bereich der Hintergreifelemente 21 in der Nut der Befestigungsschiene 5 verkeilt bzw. verklemmt, wodurch die Halteelemente 19 automatisch gegen Verschieben gesichert sind. Wird die Spannung in den Zugmitteln 34 aufgehoben, so ist die Fixierung der Halteelemente 19 in der Befestigungsschiene automatisch wieder aufgehoben. Nach der Positionierung und Fixierung des nächstfolgenden zweiten Containers 9 geht von der hinteren Befestigungsöse 23 des zweiten Halteelements 19 auch das vordere Zugmittel 34 des zweiten Containers 9 aus. Jedes Halteelement 19 dient somit der Ankopplung von jeweils einem Ende von zwei Zugmitteln 34, von denen eines dem nächstvorderen und ein anderes dem nächsthinteren Container 9 zugeordnet ist.

Die Aufstellung und Fixierung der folgenden Container 9 wird so lange fortgesetzt, bis der letzte Container 9 aufgestellt und mit einem letzten Halteelement 19 sowohl an seinem Bein 13 fixiert ist als auch mittels eines Zugmittels 34 an der vorderen Befestigungsöse 23 des letzten Halteelements 19 niedergezurrt ist.

Es versteht sich, dass es als gleichwertig anzusehen ist, ob ein einziges durchgängiges Zugmittel 34 pro Container verwendet wird, oder aber ein zwei- oder mehrgeteiltes Zugmittel 34, das z.B. über ein Adapterelement 35 formschlüssig an das Oberteil 11 des Containers 9 angekoppelt ist. Die Erfindung umfasst darüber hinaus auch die in den Figuren 1 und 2 gezeigte gleichzeitige Sicherung der Container 9 sowohl mittels der Formschlussverbindung im Bereich des Untergestells 12 als auch der Niederzurrung unter Verwendung von Zugmitteln 34, die um das Oberteil 11 der Container 9 herum verlaufen. Die Container 9 können - wie in den Figuren 1 und 2 gezeigt - mit einem horizontalen Abstand (in Längsrichtung betrachtet) zu einander aufgestellt werden, wodurch die Anbringung der Spanngurte in den Zwischenräumen erleichtert wird. Bei entsprechender Geometrie der Oberteile 11 der Container 9 ist es aber auch möglich, diese so anzuordnen, dass sie unmittelbar in Kontakt miteinander stehen, sofern in diesem Fall die Zugmittel 34 ohne größere Schwierigkeiten montiert werden können.

Der genaue Aufbau der Befestigungsschiene 5 lässt sich insbesondere den Figuren 12 und 13 entnehmen: Die Befestigungsschiene 5 ist mit einer in ihrer Längsrichtung verlaufenden Nut 42 versehen, die sich in einem verstärkten Mittelbereich befindet und mit einem Durchtrittsabschnitt 43 der Nut 42 und einem hinterschnitten ausgeführten Befestigungsabschnitt 44 der Nut 42 versehen ist. Die Nutgeometrie ist an die Geometrie der Hintergreifelemente 22 der Halteelemente 19 sowie der Klemmelemente angepasst, die weiter unten noch näher erläutert werden. Die Hinterschneidungen an den Hintergreifelementen 22 ermöglichen zwar eine Verschiebung der Halteelemente 19 bzw. der Klemmelemente in Längsrichtung der Befestigungsschiene 5, erlauben jedoch eine Kraftaufnahme in Richtung senkrecht zu einer Ebene, die durch eine Unterfläche 45 der Befestigungsschiene 5 definiert wird. Die Befestigungsschiene 5 ist beidseitig des verstärkten Mittelbereichs mit jeweils einer Reihe äquidistant zueinander angeordneter Bohrungen 46 versehen, mit der die Befestigungsschiene 5 an einem nicht dargestellten Verstärkungselement im unteren Abschnitt der Seitenwand 3 verschraubt ist.

Um zu vermeiden, dass die Halteelemente 19 bzw. Klemmelemente zum jeweiligen Befestigungsort über die gesamte Länge der Befestigungsschiene 5, die typischerweise der Länge der Ladefläche des Fahrzeugs entspricht, verschoben werden muss, befinden sich in regelmäßigem Abstand jeweils Paare von Einführöffnungen 47, in denen die Nutöffnung auf eine Breite 48 eines Nutgrundes 49 vergrößert ist. Die Einführöffnungen 47 befinden sich in einem solchen Abstand 50 zueinander, der exakt dem Abstand der Hintergreifelemente 22 der Halteelemente 19 bzw. der Klemmelemente entspricht. Da die Abmessungen der Container 9 bekannt sind und der erste Container 9 immer so nah an der Stirnwand 4 des Transportfahrzeugs 1 wie möglich angeordnet ist, sind auch die Stellen bekannt, an denen die Halteelemente 19 bzw. Klemmelemente nicht ihre Befestigungsfunktion ausüben müssen. Dort befinden sich jeweils die Paare von Einführöffnungen 47, von denen es über die Gesamtlänge der Befestigungsschiene 5 verteilt eine Mehrzahl gibt.

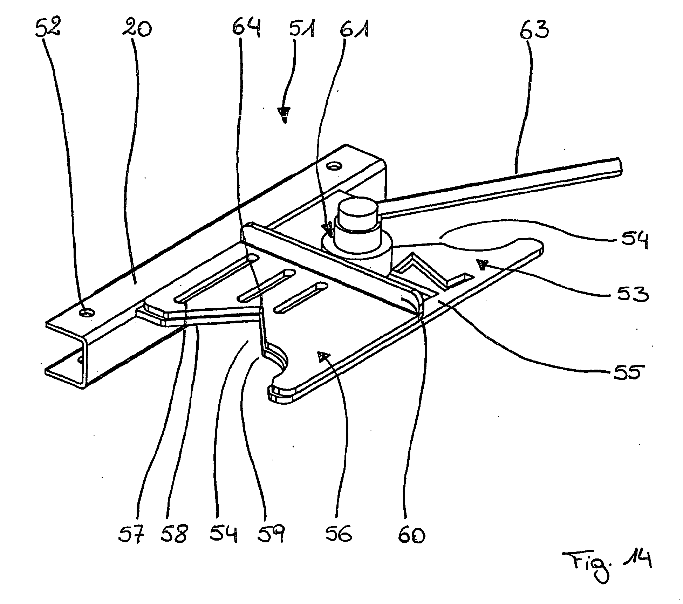

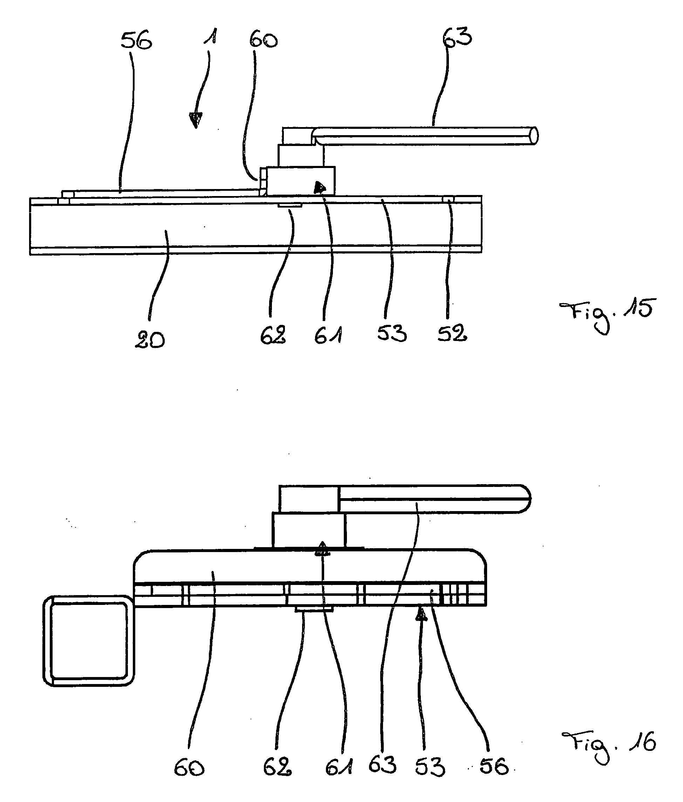

Ein in den Figuren 14 bis 16 in unterschiedlichen Ansichten dargestelltes Klemmelement 51 ähnelt in seinem Aufbau in gewisser Weise den Halteelementen 19. Identisch sind bei beiden Bauteilen der aus einem U-Profil bestehende Befestigungsschlitten 20 und die daran angebrachten Hintergreifelemente 21 mit ihren Eingriffkörpern 22, die in den Figuren 14 bis 16 der Einfachheit halber jedoch nicht dargestellt sind, wohl aber die Bohrungen 52 zur Befestigung der Hintergreifelemente 21.

Jedes Spannelement 51 besitzt eine damit verschweißte Kragplatte 53, die an gegenüber liegenden Enden jeweils einen Ausschnitt 54 aufweist, dessen Form aus einem Dreieck und einem bogenförmigen Abschnitt kombiniert ist. Auf einer Oberseite 55 der Kragplatte 53 verschiebbar angeordnet ist eine Spannplatte 56. Kragplatte 53 und Spannplatte 56 bestehen beide aus Blechmaterial mit einer Dicke von 10 mm. Die Kragplatte 53 und die Spannplatte 56 weisen darüber hinaus drei miteinander korrespondierende und parallel zueinander ausgerichtete Langlöcher 57 und 58 (in den Figuren 14 bis 16 durch die Spannplatte 56 verdeckt) auf. Die Kragplatte 53 und die Spannplatte 56 sind durch nicht dargestellte Schrauben, die durch die Langlöcher 57 und 58 hindurchgeführt sind, miteinander gekoppelt, so dass sie sich in einer Richtung senkrecht zu der Kragplatte 53 bzw. Spannplatte 56 nicht, wohl aber in eine Richtung parallel zu den Langlöchern 57, 58 bewegen können. Die Spannplatte 56 ist darüber hinaus mit einem Ausschnitt 59 versehen, dessen Form identisch mit dem in der Kragplatte 53 übereinstimmt.

Darüber hinaus besitzt die Spannplatte 56 auf ihrer dem Ausschnitt 59 abgewandten Seite einen durch Abkantung gebildeten Spannschenkel 60, der mit einem an der Kragplatte 53 gelagerten Exzenter 61 zusammenwirkt. Der als Scheibe ausgebildete Exzenter 61 ist mit einem Zapfen 62 drehbar in einer entsprechenden Bohrung in der Kragplatte 53 gelagert. Durch Verdrehung des Exzenters 61 an einem Griff 63 lässt sich über den Spannschenkel 60 Druck auf die Spannplatte ausüben bzw. diese in Richtung der Langlöcher 57 und 58 verschieben, wodurch der wirksame Abstand zwischen Ecken 64 in den Ausschnitten 54 und 59 vergrößert bzw. verkleinert wird. Aufgrund der geringen Steigung der äußeren Bahnkurve des Exzenters 61 in Bezug auf dessen Drehachse tritt nach einmaligem Verspannen von Spannplatte 56 und Kragplatte 53 zueinander Selbsthemmung ein, so dass keine weiteren Fixiermittel erforderlich sind. Das Lösen der Klemmelemente 51 erfolgt einfach durch Entspannen der Exzenter 61.

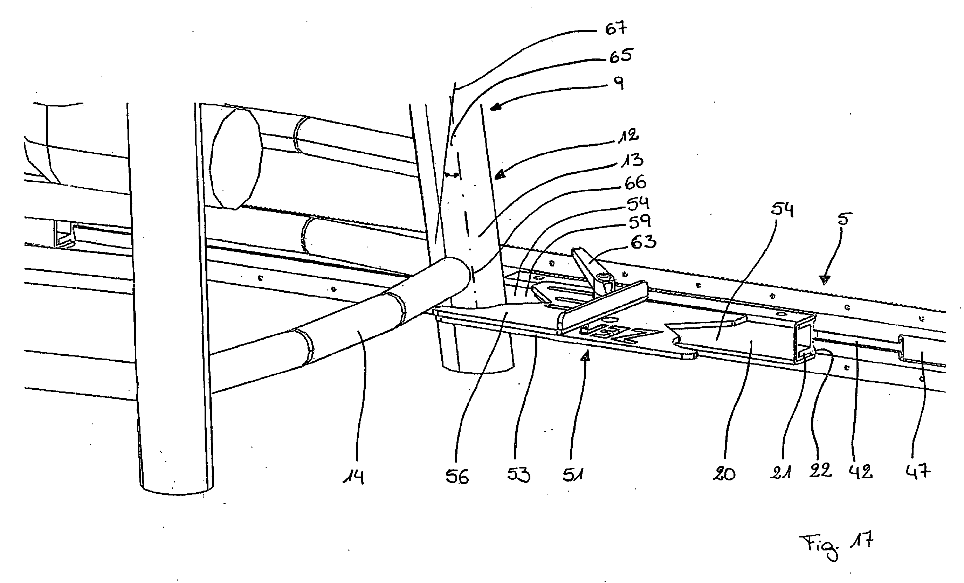

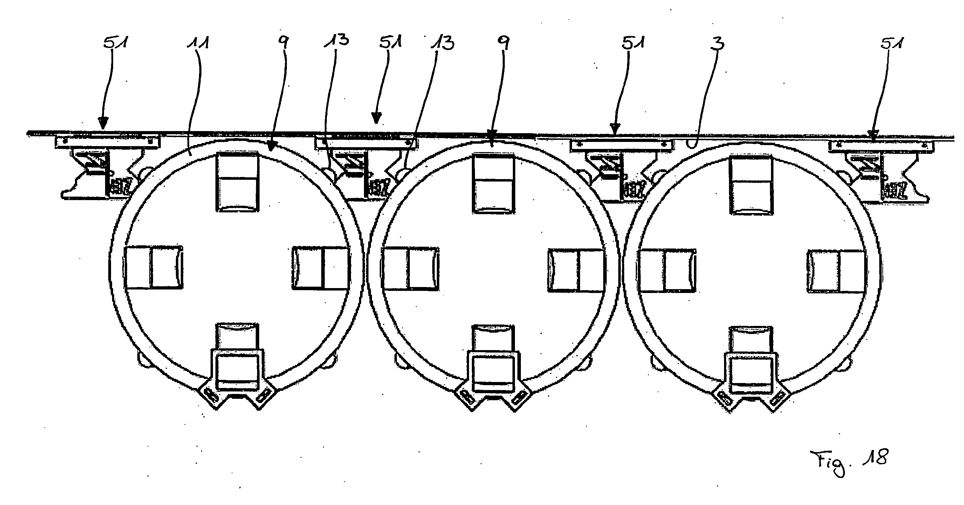

Aus den Figuren 17 bis 20 lässt sich nunmehr die Funktionsweise der Klemmelemente 51 in ihrem Zusammenwirken mit den Unterteilen 12 der Container 9 erkennen: Figur 17 zeigt in vergrößerter Darstellung, wie ein Klemmelement 51 in die Befestigungsschiene 5 eingesetzt ist. In die Ausschnitte 54 in der Kragplatte 53 und 59 in der Spannplatte 56 ist ein unterer Abschnitt des Beins 13 des Containers 9 eingeführt. In dem gegenüber liegenden Ausschnitt 54 der Kragplatte 53 wird in einem nächsten Schritt der Unterabschnitt des Beins 13 eines benachbarten Containers 9 platziert. Diese Situation ist in einer vergrößerten Draufsicht in Figur 18 veranschaulicht: Zwei mittlere Klemmelemente 51 klemmen mit den Wandungen der Ausschnitte 54 der Kragplatte 53 bzw. den Wandungen des Ausschnitts 59 in der Spannplatte 53 an den damit in Kontakt stehenden äußeren Mantelfläche der Beine 13 zweier benachbarter Container 9. Es sei angenommen, dass das in Figur 18 links dargestellte Klemmelement 51 in der Nähe der nicht dargestellten Stirnwand 4 des Transportfahrzeugs 1 angeordnet ist, so dass links von diesem Klemmelement 51 kein weiterer Container 9 positioniert ist. Weiter sei angenommen, dass lediglich drei Container 9 in einer Reihe positioniert sind, so dass hinter dem rechts sichtbaren Klemmelement 51 gleichfalls kein weiterer Container 9 folgt. Nachdem in einem ersten Schritt das linke Klemmelement 51 positioniert wurde, wird anschließend ein Container 9 so abgestellt, dass sein Bein 13 in den Ausschnitt 54 der Kragplatte 53 eingreift. Sodann wird das nächstfolgende hintere Klemmelement 51 in Position gebracht und in einem nächsten Schritt wieder ein Container 9, ein weiteres Klemmelement 51, ein weiterer Container 9 und schließlich das in Figur 18 ganz rechts dargestellte Spannelement 51. Dabei werden die Container so positioniert, dass sie mit den äußeren Mantelflächen ihrer Oberteile 11 sowohl nahezu an die Seitenwand 3 anstoßen als auch nahezu an das Oberteil 11 eines jeweils benachbarten Containers 9. Die Kragplatten 53 der Klemmelemente 51 sind so bemessen, dass diese in diesem Fall gerade so zwischen den Beinen 13 benachbarter Container 9 angeordnet werden können. Eine transportsichere Fixierung der Container 9 erfolgt nunmehr durch Verspannen der Spannplatten 56 sämtlicher Klemmelemente 51 unter Zuhilfenahme der griffbetätigten Exzenter 61. Aufgrund einer Neigung der Beine 13 nach außen, d.h. aufgrund eines Winkels 65 zwischen einer Längsachse 66 der jeweiligen Beine 13 und der Vertikalen 67 können die Container 9 bei einer derartigen Verspannung nicht kippen. Darüber hinaus findet im Bereich der Oberteile 11 der Container 9 ebenfalls bei Bedarf eine gegenseitige Abstützung statt. Falls gewünscht kann die Befestigungsschiene 5 aber auch etwas erhöht angeordnet werden, so dass die Spannplatte 56 und die Kragplatte 53 der Spannelemente 51 dann oberhalb berhalb der jeweiligen Horizontalstrebe 14 des Untergestells 12 des Containers 9 zur Anlage kommt und somit die Kippsicherheit weiter erhöht. Falls die Sicherung der Container 9 allein mittels der Klemmelemente 51 und ohne die Zugmittel 34 erfolgt, sind die Befestigungsschlitten 20 am jeweils gewünschten Ort gesondert in der Befestigungsschiene 5 zu fixieren, was z.B. mittels mindestens einer Klemmschraube erfolgen kann, die in Gewindebohrungen in dem Befestigungsschlitten 20 eingeschraubt wird und aufgrund ihrer Abstützung an der Vorderseite der Befestigungsschiene 5 eine Verklemmung und damit Fixierung des Befestigungsschlittens 20, d.h. auch des daran befestigten Klemmelements 51, bewirkt.

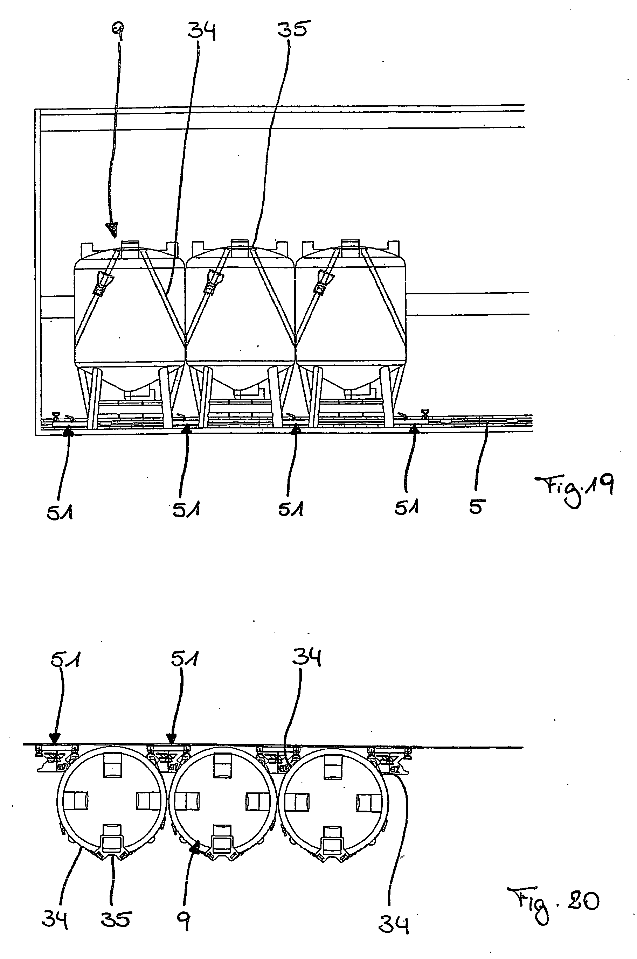

In den Figuren 19 und 20 sind die Zugmittel 34 dargestellt, mit denen die Container 9 zusätzlich noch am Laderaumboden verzurrt sind. Die Zugmittel 34 in Form von Spanngurten verlaufen dabei auf identische Weise, wie dies bereits in den Figuren 1 und 2 für den Fall der Halteelemente 19 dargestellt wurde. Die Befestigungspunkte der Zugmittel 34 an den Klemmelementen 51 sind dieselben wie bei den Halteelementen 19. Auch der Gurtverlauf über die Oberteile 11 der Container 9, insbesondere die Anbindung der Adapterelemente 35, ist unverändert.

### Bezugszeichenliste

- 1: Transportfahrzeug
- 2: Ladefläche
- 3: Seitenwand
- 4: Stirnwand
- 5: Befestigungsschiene
- 6: Laderaumdecke
- 7: Verstärkungsstrebe
- 8: Verstärkungsstrebe
- 9: Container
- 10: Längsachse
- 11: Oberteil
- 12: Unterteil
- 13: Bein
- 14: Horizontalstrebe
- 15: Auslauftrichter
- 16: Stapelpratze
- 17: Fuß
- 18: Oberseite
- 19: Halteelement
- 20: Befestigungsschlitten
- 21: Hintergreifelement
- 22: Eingriffkörper
- 23: Befestigungsöse
- 24: Ausleger
- 25: Führungsteil
- 26: Verbindungsteil
- 27: Schiebeelement
- 28: Langloch
- 29: Fixierbolzen
- 30: Kopplungselement
- 31: Backen
- 32: Spindel
- 33: SchnellSpannschloss
- 34: Zugmittel
- 35: Adapterelement
- 36: Ausnehmung
- 37: Adapterrahmen
- 38: Winkel
- 39: Adapterarm
- 40: Befestigungsöse
- 41: Spannschloss
- 42: Nut
- 43: Durchtrittsabschnitt
- 44: Befestigungsabschnitt
- 45: Unterflächen
- 46: Bohrungen
- 47: Einführöffnungen
- 48: Breite
- 49: Nutgrund
- 50: Abstand
- 51: Klemmelement
- 52: Bohrungen
- 53: Kragplatte
- 54: Ausschnitt
- 55: Oberseite
- 56: Spannplatte
- 57: Langloch
- 58: Langloch
- 59: Ausschnitt
- 60: Spannschenkel
- 61: Exzenter
- 62: Zapfen
- 63: Griff
- 64: Ecke
- 65: Winkel
- 66: Längsachse
- 67: Vertikale

## Patentansprüche

1. Verfahren zum Sichern eines Ladungsgegenstandes in einem Transportfahrzeug (1), das eine Ladefläche (2) und mindestens eine parallel zu einer Längsachse (10) des Transportfahrzeugs (1) verlaufende Wand (3) aufweist, an der ladeflächennah eine parallel zu der Ladefläche (2) verlaufende Befestigungsschiene (5) zur Anbringung von Zugmitteln (34) angeordnet ist, wobei der Ladungsgegenstand ein Container (9) mit einem einen Hohlraum umschließenden Oberteil (11) und einem Streben aufweisenden, gestellartigen Unterteil (12) ist, mit den folgenden Verfahrensschritten:
- Der Container (9) wird angrenzend an die Wand (3) auf der Ladefläche (2) abgestellt,
**gekennzeichnet durch** die folgenden Verfahrensschritte:
- Der Container (9) wird mittels mindestens eines mit der Befestigungsschiene (5) mittelbar oder unmittelbar verbundenen Zugmittels (34) in Richtung auf die Ladefläche (2) gezurrt.
- Ein erstes Ende des Zugmittels (34) wird mit der Befestigungsschiene (5) verbunden, das Zugmittel (34) wird so um das Oberteil (11) herum geführt und mit einem zweiten Ende mit der Befestigungsschiene (5) verbunden und gespannt, dass - in einer vertikalen Ebene senkrecht zu der Wand (3) betrachtet - eine Komponente einer von dem Zugmittel (34) übertragenen Haltekraft in Richtung auf die Wand (3) zu verläuft und wobei **durch** eine senkrecht zur Ladefläche (2) wirkende Kraft die Reibkraft zwischen dem Ladungsgegenstand und der Ladefläche (2) erhöht wird, wobei
- der größte Abstand des Zugmittels (34) von der zugeordneten Wand (3) im Bereich des Oberteils (11) größer als 50 %, vorzugsweise zwischen 90 % und 100 % des Durchmessers oder der senkrecht zu der Seitenwand gemessenen Breite des Oberteils (11) und
- der größte Abstand des Zugmittels (34) von der Ladefläche (2) größer ist als 50 %, vorzugsweise zwischen 70 % und 100 %, der Höhe des Containers (9) beträgt.
- Das Zugmittel (34) wird mit genau einer Befestigungsschiene (5) verbunden, wobei sämtliche den Container (9) sichernde Zugmittel (34) mit derselben Wand (3) verbunden werden.

2. Verfahren nach Anspruch 1, **dadurch gekennzeichnet, dass** mindestens ein Ende des Zugmittels (34) mit einem Befestigungsschlitten (20) eines Halteelements (19) verbunden wird, wobei der Befestigungsschlitten (20) in einer Nut der Befestigungsschiene (5) in deren Längsrichtung verschoben und in einer Befestigungsposition an der Befestigungsschiene (5) festgelegt wird.

3. Verfahren nach Anspruch 1 oder 2, **dadurch gekennzeichnet, dass** das Zugmittel (34) mit einem Adapterelement (35) verbunden wird, das formschlüssig mit dem Oberteil (11) des Containers (9), vorzugsweise mit einem über eine Mantelfläche des Oberteils (11) vorstehenden Anbauteil, gekoppelt wird.

4. Verfahren nach einem der Ansprüche 1 bis 3, **dadurch gekennzeichnet, dass** in einer Draufsicht auf den Container (9) betrachtet ein Umschlingungswinkel des Zugmittels (34) um den Container (9) mindestens 90°, vorzugsweise mindestens 120°, weiter vorzugsweise mindestens 150°, beträgt.

5. Verfahren zum Sichern eines Ladungsgegenstandes in einem Transportfahrzeug nach einem der Ansprüche 1 bis 4, wobei das Transportfahrzeug (1) eine Ladefläche (2) und mindestens parallel zu einer Längsachse (10) des Transportfahrzeugs (1) verlaufende Wand (3) aufweist, an der jeweils ladeflächennah und parallel zu der Ladefläche (2) eine Befestigungsschiene (5) zur Anbringung von Halteelementen (19) angeordnet ist, wobei der Ladungsgegenstand ein Container (9) mit einem einen Hohlraum umschließenden Oberteil (11) und einem Streben aufweisenden gestellartigen Unterteil (12) ist, mit den folgenden Verfahrensschritten:
- Der Container (9) wird angrenzend an die Wand (3) auf der Ladefläche (2) abgestellt
**gekennzeichnet durch** den folgenden Verfahrensschritt:
- Das Unterteil (12) des Containers (9) wird mittels mindestens eines Kopplungselements (30) des Halteelements (19) formschlüssig gekoppelt und der Container (9) insgesamt starr mit der Befestigungsschiene (5) verbunden, wobei ein Abstand des Kopplungselements (30) des Halteelements (19) von der zugeordneten Wand (3) eingestellt und das Kopplungselement (30) in einer Kopplungsposition an dem Halteelement (19) festgelegt wird.

6. Verfahren nach Anspruch 5, **dadurch gekennzeichnet, dass** jeder Container (9) nach Anordnung in seiner Transportposition an einer einer vorderen Stirnwand (4) des Transportfahrzeugs (1) abgewandten Seite mittels des Halteelements (19) fixiert wird.

7. Verfahren nach Anspruch 5 oder 6, **dadurch gekennzeichnet, dass** das Halteelement (19) an einem Befestigungsschlitten (20) angeordnet und zusammen mit diesem entlang der Befestigungsschiene (5) verschoben und in einer Befestigungsposition an der Befestigungsschiene (5) festgelegt wird.

8. Verfahren nach einem der Ansprüche 5 bis 7, **dadurch gekennzeichnet, dass** eine Strebe, insbesondere ein Bein (13) oder ein Fuß, des Unterteils (12) des Containers (9) mittels eines Kopplungselements (30) in Form vorzugsweise einer Halteklammer mit dem Halteelement (19) verbunden wird.

9. Verfahren zum Sichern eines Ladungsgegenstandes in einem Transportfahrzeug (1), nach einem der Ansprüche 1 bis 4, wobei das Transportfahrzeug (1) eine Ladefläche (2) und mindestens eine parallel zu einer Längsachse (10) des Transportfahrzeugs (1) verlaufende Wand (3) aufweist, an denen jeweils ladeflächennah und parallel zu der Ladefläche (2) eine Befestigungsschiene angeordnet ist, wobei der Ladungsgegenstand ein Container (9) ist und ein einen Hohlraum umschließendes Oberteil (11) und ein Streben aufweisendes gestellartiges Unterteil (12) aufweist, mit den folgenden Verfahrensschritten:
- Der Container (9) wird angrenzend an die Wand (3) auf der Ladefläche (2) angeordnet.
**gekennzeichnet durch** die folgenden Verfahrensschritte:
- Auf einer der Stirnwand (4) des Transportfahrzeugs (1) zugewandten Seite des Containers (9) wird ein erstes Klemmelement (51) und auf einer der Stirnwand (4) abgewandten Seite des Containers (9) wird ein zweites Klemmelement (51) angeordnet, wobei beide Klemmelemente (51) starr mit der Befestigungsschiene (5) verbunden werden.
- Der Container (9) wird in eine Richtung parallel zu der Längsachse (10) des Transportfahrzeugs (1) mit seinem Unterteil (12) zwischen den Klemmelementen (51) eingespannt, indem die wirksame Länge mindestens eines der beiden Klemmelemente (51) vergrößert wird.

10. Verfahren nach Anspruch 9, **dadurch gekennzeichnet, dass** die Klemmelemente (51) von einem Ausgangszustand, in dem sich zwei relativ zueinander bewegliche Elementteile in einer Lösestellung befinden, in einen Klemmzustand überführt werden, in dem die Elementteile weiter als in dem Lösezustand voneinander entfernt sind, und dass anschließend die Elementteile in dem Klemmzustand relativ zueinander fixiert werden.

11. Ladungssicherungssystem mit
- einer in eine Wand (3), die in Längsrichtung (10) eines Transportfahrzeugs (1) verläuft, integrierbaren Befestigungsschiene (5), die parallel zu und in der Nähe einer Ladefläche (2) des Transportfahrzeugs (1) verläuft, die mit der Wand (3) einen rechten Winkel einschließt und
- einem Zugmittel (34), das mit der Befestigungsschiene (5) mittelbar oder unmittelbar verbindbar und mit dem ein Ladungsgegenstand verzurrbar ist,
**dadurch gekennzeichnet, dass**
- der Ladungsgegenstand ein Container (9) ist und ein einen Hohlraum umschließendes Oberteil (11) und ein Streben aufweisendes, gestellartiges Unterteil (12) aufweist,
- der Container (9) mittels mindestens eines mit der Befestigungsschiene (5) mittelbar oder unmittelbar verbundenen Zugmittels (34) in Richtung auf die Ladefläche (2) gezurrt ist,
- ein Zugmittel (34), das mit einem ersten Ende mit der Befestigungsschiene (5) verbunden, um das Oberteil (11) des Containers (9) herum führbar und mit einem zweiten Ende mit der Befestigungsschiene (5) verbunden ist, so dass - in einer vertikalen Ebene senkrecht zu der Wand (3) betrachtet - eine Komponente einer von dem Zugmittel (34) übertragenen Kraft in eine Richtung auf die Wand (3) zu verläuft, wobei dich eine senkrecht zur Ladefläche (2) wirkende Kraft die Reibkraft zwischen dem Ladungsgegenstand und der Ladefläche (2) erhöht wird, wobei der größte Abstand des Zugmittels (34) von der zugeordneten Wand (3) im Bereich des Oberteils (11) größer als 50 %, vorzugsweise zwischen 90 % und 100 % des Durchmessers oder der senkrecht zu der Seitenwand gemessenen Breite des Oberteils (11) und
- der größte Abstand des Zugmittels (34) von der Ladefläche (2) größer ist als 50 %, vorzugsweise zwischen 70 % und 100 %, der Höhe des Containers (9) beträgt und
- das Zugmittel (34) mit genau einer Befestigungsschiene (5) verbunden ist, wobei sämtliche den Container (9) sichernde Zugmittel (34) mit derselben Wand (3) verbunden sind.

12. Ladungssicherungssystem nach Anspruch 11, **gekennzeichnet durch** ein Adapterelement (35) vorzugsweise in Form einer Adapterplatte, die auf ein über eine Mantelfläche des Oberteils (11) des Containers (9) vorstehendes Anbauteil formschlüssig aufsetzbar ist und die mindestens eine Durchführöffnung für ein Zugmittel (34) aufweist.

13. Ladungssicherungssystem nach Anspruch 11 oder 12, mit
- einer in eine Wand (3), die in Längsrichtung (10) eines Transportfahrzeugs (1) verläuft, integrierbaren Befestigungsschiene (5), die parallel zu und in der Nähe einer Ladefläche (2) des Transportfahrzeugs (1) verläuft, die mit der Wand (3) einen rechten Winkel einschließt und
- einem Halteelement (19), das mit der Befestigungsschiene (5) verbindbar ist,
**dadurch gekennzeichnet, dass**
- der Ladungsgegenstand ein Container (9) ist und ein einen Hohlraum umschließendes Oberteil (11) und ein Streben aufweisendes, gestellartiges Unterteil (12) aufweist und
- ein Kopplungselement (30) des Halteelements (19) formschlüssig mit dem Unterteil (12) des Containers (9) und dieser insgesamt starr mit der Befestigungsschiene (5) verbindbar ist, wobei ein Abstand des Kopplungselements (30) des Halteelements (19) von der zugeordneten Wand (3) einstellbar und das Kopplungselement (30) in einer Kopplungsposition an dem Halteelement (19) festlegbar ist.

14. Ladungssicherungssystem nach Anspruch 11 oder 12, mit
- einer in eine Wand (3), die in Längsrichtung (10) eines Transportfahrzeugs (1) verläuft, integrierbaren Befestigungsschiene (5), die parallel zu und in den Nähe einer Ladefläche (2) des Transportfahrzeugs (1) verläuft, die mit der Wand (3) einen rechten Winkel einschließt,
**gekennzeichnet durch**
- zwei Klemmelemente (51), die auf - in Richtung der Längsachse (10) des Transportfahrzeugs (1) betrachtet - entgegen gesetzten Seiten des Containers (9) angeordnet, in ihrer wirksamen Länge veränderbar und mit der Befestigungsschiene (5) starr verbindbar sind, wobei das Unterteil (12) des Containers (9) **durch** Veränderung der wirksamen Länge mindestens eines der Klemmelemente (51) zwischen den beiden Klemmelementen (51) einspannbar ist.

15. Ladungssicherungssystem nach Anspruch 14, **dadurch gekennzeichnet, dass** die Klemmelemente (51) von einem Ausgangszustand, in dem zwei Elementteile sich in einer Lösestellung befinden, in einen Klemmzustand überführbar sind, in dem die Elementteile weiter als in dein Lösezustand voneinander entfernt sind, wobei die Elementteile in dem Klemmzustand relativ zueinander fixierbar sind.

16. Ladungssicherungssystem nach Anspruch 14 oder 15, **dadurch gekennzeichnet, dass** die Klemmelemente (51) an entgegen gesetzten Enden jeweils formschlüssig mit dem Unterteil (12) des zugeordneten Containers (9) derart koppelbar sind, dass eine Verlagerung der Container (9) quer zu der Längsachse (10) des Transportfahrzeugs (1) unterbunden ist.

17. Ladungssicherungssystem nach einem der Ansprüche 11 bis 16, **gekennzeichnet durch** mindestens einen Befestigungsschlitten (20), der entlang der Befestigungsschiene (5) verschiebbar und mit dieser formschlüssig koppelbar ist und
- der mindestens einen Anschluss für ein Zugmittel (34) aufweist und/oder
- an dem das Kopplungselement (30) des Halteelements (19) angeordnet ist und/oder
- an dem ein Klemmelement (51) angeordnet ist.

18. Ladungssicherungssystem nach Anspruch 17, **dadurch gekennzeichnet, dass** die Befestigungsschiene (5) in ihrer Längsrichtung verteilt angeordnete Ausnehmungen aufweist, in die mindestens ein Hintergreifelement (21) des Befestigungsschlittens (20) einsetzbar ist, wobei durch Verschieben des Befestigungsschlittens (20) ein Formschluss zwischen der hinterschnittenen Befestigungsschiene (5) und dem Befestigungsschlitten (20) erzeugbar ist.

19. Ladungssicherungssystem nach Anspruch 17 oder 18, **dadurch gekennzeichnet, dass** das vorzugsweise einen Befestigungsschlitten (20) aufweisende Halteelement (19) einen senkrecht zu der Wand (3) des Transportfahrzeugs (1) verlaufenden Ausleger (24) besitzt, an dem entlang ein mit dem Kopplungselement (30) versehenes Schiebeelement (27) verschiebbar ist.

20. Ladungssicherungssystem nach einem der Ansprüche 11 bis 19, **dadurch gekennzeichnet, dass** das Transportfahrzeug (1) einen Kühlkoffer oder Kühlauflieger aufweist und die an gegenüber liegenden Wänden (3) angeordnete Befestigungsschiene (5) jeweils an einem innerhalb der zugeordneten Wand (3) befindlichen und mit einem die Ladefläche (2) bildenden Laderaumboden des Transportfahrzeugs (1) und/oder dessen Tragstruktur verbundenen Verstärkungselement befestigt ist.

## Claims

1. A method for securing a load object in a transport vehicle (1), which has a load surface (2) and at least one wall (3) running parallel to a longitudinal axis (10) of the transport vehicle (1), on which wall a fastening rail (5) for attaching pulling means (34), which runs parallel to the loading surface (2), is arranged close to the loading surface, wherein the load object is a container (9) having an upper part (11) which encloses a cavity and a frame-like lower part (12) having struts, having the following method steps:
- The container (9) is placed on the loading surface (2) adjacently to the wall (3),
**characterised by** the following method steps:
- The container (9) is lashed down in the direction of the loading surface (2) by means of at least one pulling means (34) which is connected directly or indirectly to the fastening rail (5).
- A first end of the pulling means (34) is connected to the fastening rail (5), the pulling means (34) is guided around the upper part (11) and connected to the fastening rail (5) at a second end and tensioned in such a manner that - viewed in a vertical plane perpendicular to the wall (3) - a component of a retaining force transmitted by the pulling means (34) runs in the direction of the wall (3) and wherein the friction between the load object and the loading surface (2) is increased by a force effective perpendicularly to the loading surface (2), wherein
- the greatest distance of the pulling means (34) from the associated wall (3) in the region of the upper part (11) is greater than 50%, preferably between 90% and 100% of the diameter or of the width of the upper part (11) measured perpendicularly to the side wall, and
- the greatest distance of the pulling means (34) from the loading surface (2) is greater than 50%, preferably between 70% and 100%, of the height of the container (9).
- The pulling means (34) is connected to exactly one fastening rail (5), wherein all the pulling means (34) securing the container (9) are connected to the same wall (3).

2. The method according to Claim 1, **characterised in that** at least one end of the pulling means (34) is connected to a fastening slide (20) of a retaining element (19), wherein the fastening slide (20) is displaced in a groove of the fastening rail (5) in the longitudinal direction thereof and is fixed on the fastening rail (5) in a fastening position.

3. The method according to Claim 1 or 2, **characterised in that** the pulling means (34) is connected to an adapter element (35), which is coupled in a form-fitting manner to the upper part (11) of the container (9), preferably to an attachment part which projects over a lateral surface of the upper part (11).

4. The method according to one of Claims 1 to 3, **characterised in that**, when the container (9) is viewed from above, a wrap-around angle of the pulling means (34) around the container (9) is at least 90°, preferably at least 120°, further preferably at least 150°.

5. The method for securing a load object in a transport vehicle according to one of Claims 1 to 4, wherein the transport vehicle (1) has a load surface (2) and at least one wall (3) running parallel to a longitudinal axis (10) of the transport vehicle (1), on which wall a fastening rail (5) for attaching retaining elements (19) is arranged in each case close and parallel to the loading surface (2), wherein the load object is a container (9) having an upper part (11) which encloses a cavity and a frame-like lower part (12) having struts, having the following method steps:
- The container (9) is placed on the loading surface (2) adjacently to the wall (3),
**characterised by** the following method step:
- The lower part (12) of the container (9) is coupled in a form-fitting manner by means of at least one coupling element (30) of the retaining element (19), and the container (9) as a whole is connected rigidly to the fastening rail (5), wherein a distance of the coupling element (30) of the retaining element (19) from the associated wall (3) is set and the coupling element (30) is fixed on the retaining element (19) in a coupling position.

6. The method according to Claim 5, **characterised in that** each container (9) is fixed after arrangement in its transport position on a side facing away from a front end wall (4) of the transport vehicle (1) by means of the retaining element (19).

7. The method according to Claim 5 or 6, **characterised in that** the retaining element (19) is arranged on a fastening slide (20) and together with the latter is displaced along the fastening rail (5) and fixed on the fastening rail (5) in a fastening position.

8. The method according to one of Claims 5 to 7, **characterised in that** a strut, in particular a leg (13) or a foot, of the lower part (12) of the container (9) is connected to the retaining element (19) by means of a coupling element (30), preferably in the form of a retaining clamp.

9. The method for securing a load object in a transport vehicle (1) according to one of Claims 1 to 4, wherein the transport vehicle (1) has a load surface (2) and at least one wall (3) running parallel to a longitudinal axis (10) of the transport vehicle (1), on which wall a fastening rail is arranged in each case close and parallel to the loading surface (2), wherein the load object is a container (9) having an upper part (11) which encloses a cavity and a frame-like lower part (12) having struts, having the following method steps:
- The container (9) is arranged on the loading surface (2) adjacently to the wall (3),
**characterised by** the following method steps:
- A first clamping element (51) is arranged on a side of the container (9) facing the end wall (4) of the transport vehicle (1) and a second clamping element (51) is arranged on a side of the container (9) facing away from the end wall (4), wherein both clamping elements (51) are connected rigidly to the fastening rail (5).
- The container (9) is clamped with its lower part (12) between the clamping elements (51) in a direction parallel to the longitudinal axis (10) of the transport vehicle (1) by the effective length of at least one of the two clamping elements (51) being increased.

10. The method according to Claim 9, **characterised in that** the clamping elements (51) are transferred from a starting state in which two element parts, which can be moved relative to each other, are in a release position to a clamping state in which the element parts are at a greater distance from each other than in the release state, and that the element parts are then fixed relative to each other in the clamping state.

11. A load-securing system, having
- a fastening rail (5) which can be integrated in a wall (3) running in the longitudinal direction (10) of a transport vehicle (1) and runs parallel to and in the vicinity of a loading surface (2) of the transport vehicle (1), which surface encloses a right angle with the wall (3), and
- a pulling means (34), which can be connected directly or indirectly to the fastening rail (5) and with which a load object can be lashed down,
**characterised in that**
- the load object is a container (9) and has an upper part (11) which encloses a cavity and a frame-like lower part (12) which has struts,
- the container (9) is lashed down in the direction of the loading surface (2) by means of at least one pulling means (34) which is connected directly or indirectly to the fastening rail (5),
- a pulling means (34), which is connected at a first end to the fastening rail (5), can be guided around the upper part (11) of the container (9) and is connected at a second end to the fastening rail (5), so that - viewed in a vertical plane perpendicular to the wall (3) - a component of a force transmitted by the pulling means (34) runs in a direction towards the wall (3), wherein the friction between the load object and the loading surface (2) is increased by a force effective perpendicularly to the loading surface (2), wherein the greatest distance of the pulling means (34) from the associated wall (3) in the region of the upper part (11) is greater than 50%, preferably between 90% and 100% of the diameter or of the width of the upper part (11) measured perpendicularly to the side wall, and
- the greatest distance of the pulling means (34) from the loading surface (2) is greater than 50%, preferably between 70% and 100%, of the height of the container (9), and
- the pulling means (34) is connected to exactly one fastening rail (5), wherein all the pulling means (34) securing the container (9) are connected to the same wall (3).

12. The load-securing system according to Claim 11, **characterised by** an adapter element (35), preferably in the form of an adapter plate, which can be placed in a form-fitting manner onto an attachment part which projects over a lateral surface of the upper part (11) of the container (9) and which has at least one through-opening for a pulling means (34).

13. The load-securing system according to Claim 11 or 12, having
- a fastening rail (5) which can be integrated in a wall (3) running in the longitudinal direction (10) of a transport vehicle (1) and runs parallel to and in the vicinity of a loading surface (2) of the transport vehicle (1), which surface encloses a right angle with the wall (3), and
- a retaining element (19), which can be connected to the fastening rail (5),
**characterised in that**
- the load object is a container (9) and has an upper part (11) which encloses a cavity and a frame-like lower part (12) which has struts, and
- a coupling element (30) of the retaining element (19) is connected in a form-fitting manner to the lower part (12) of the container (9), and the latter as a whole can be connected rigidly to the fastening rail (5), wherein a distance of the coupling element (30) of the retaining element (19) from the associated wall (3) can be set and the coupling element (30) can be fixed on the retaining element (19) in a coupling position.

14. The load-securing system according to Claim 11 or 12, having
- a fastening rail (5) which can be integrated in a wall (3) running in the longitudinal direction (10) of a transport vehicle (1) and runs parallel to and in the vicinity of a loading surface (2) of the transport vehicle (1), which surface encloses a right angle with the wall (3),
**characterised by**
- two clamping elements (51), which - viewed in the direction of the longitudinal axis (10) of the transport vehicle (1) - are arranged on opposite sides of the container (9), can be changed in terms of their effective length and can be connected rigidly to the fastening rail (5), wherein the lower part (12) of the container (9) can be clamped between the two clamping elements (51) by changing the effective length of at least one of the clamping elements (51).

15. The load-securing system according to Claim 14, **characterised in that** the clamping elements (51) can be transferred from a starting state in which two element parts are in a release position to a clamping state in which the element parts are at a greater distance from each other than in the release state, wherein the element parts can be fixed relative to each other in the clamping state.

16. The load-securing system according to Claim 14 or 15, **characterised in that** the clamping elements (51) can be coupled in each case in a form-fitting manner to the lower part (12) of the associated container (9) at opposite ends in such a manner that a shift of the container (9) transversely to the longitudinal axis (10) of the transport vehicle (1) is prevented.

17. The load-securing system according to one of Claims 11 to 16, **characterised by** at least one fastening slide (20), which can be displaced along the fastening rail (5) and coupled in a form-fitting manner to the latter, and
- which has at least one connection for a pulling means (34), and/or
- on which the coupling element (30) of the retaining element (19) is arranged, and/or
- on which a clamping element (51) is arranged.

18. The load-securing system according to Claim 17, **characterised in that** the fastening rail (5) has recesses distributed in the longitudinal direction thereof, into which recesses at least one engagement element (21) of the fastening slide (20) can be inserted, wherein a form fit can be created between the undercut fastening rail (5) and the fastening slide (20) by displacing the fastening slide (20).

19. The load-securing system according to Claim 17 or 18, **characterised in that** the retaining element (19), which has preferably one fastening slide (20), has an arm (24) which runs perpendicularly to the wall (3) of the transport vehicle (1) and along which a slide element (27) which is provided with the coupling element (30) can be displaced.

20. The load-securing system according to one of Claims 11 to 19, **characterised in that** the transport vehicle (1) has a refrigerated body or refrigerated trailer, and the fastening rail (5), which is arranged on opposite walls (3), is fastened in each case to a reinforcement element which is situated inside the associated wall (3) and is connected to a load space floor of the transport vehicle (1) and/or the support structure thereof, which forms the loading surface (2).

## Revendications

1. Procédé destiné à sécuriser un objet de chargement dans un véhicule de transport (1), qui présente une surface de chargement (2) et au moins une cloison (3) parallèle à un axe longitudinal (10) du véhicule de transport (1), sur laquelle est disposé un rail de fixation (5) parallèle à la surface de chargement (2) et proche de celle-ci pour placer des moyens de traction (34), sachant que l'objet de chargement est un conteneur (9) comprenant une partie supérieure (11) entourant une cavité et une partie inférieure (12) en forme de châssis présentant un étai, comprenant les étapes suivantes :
- le conteneur (9) est déposé sur la surface de chargement (2) de manière adjacente à la cloison (3),
**caractérisé par** l'étape suivante :
- le conteneur (9) est amarré au moyen d'au moins un moyen de traction (34) relié directement ou indirectement au rail de fixation (5) en direction de la surface de chargement (2),
- une première extrémité du moyen de traction (34) est reliée au rail de fixation (5), le moyen de traction (34) étant dirigé autour de la partie supérieure (11) et relié à la deuxième extrémité du rail de fixation (5) et tendu de telle sorte que, vu dans un plan vertical perpendiculairement à la cloison (3), une composante d'une force de retenue transmise par le moyen de traction (34) va en direction de la cloison (3) et sachant que par une force agissant perpendiculairement à la surface de chargement (2), la force de frottement entre l'objet de chargement et la surface de chargement (2) est augmentée, sachant que
- la plus grande distance du moyen de traction (34) depuis la cloison (3) correspondante au niveau de la partie supérieure (11) fait plus de 50%, de préférence entre 90% et 100% du diamètre ou de la largeur de la partie supérieure (11) perpendiculaire à la cloison latérale mesurée et
- la plus grande distance du moyen de traction (34) depuis la surface de chargement (2) fait plus de 50%, de préférence entre 70% et 100%, de la hauteur du conteneur (9),
- le moyen de traction (34) est relié à un rail de fixation (5) précisément, sachant que l'ensemble des moyens de traction (34) sécurisant le conteneur (9) sont reliés à la même cloison (3).

2. Procédé selon la revendication 1, **caractérisé en ce qu'**au moins une extrémité du moyen de traction (34) est reliée à un chariot de fixation (20) d'un élément de retenue (19), sachant que le chariot de fixation (20) est poussé dans une rainure du rail de fixation (5) dans son sens longitudinal et fixé dans une position de fixation sur le rail de fixation (5).

3. Procédé selon la revendication 1 ou 2, **caractérisé en ce que** le moyen de traction (34) est relié à un élément adaptateur (35) qui est couplé par complémentarité de forme à la partie supérieure (11) du conteneur (9), de préférence à une pièce rapportée en saillie au-dessus de la surface d'enveloppe de la partie supérieure (11).

4. Procédé selon l'une des revendications 1 à 3, **caractérisé en ce que** dans une vue de dessus sur le conteneur (9), un angle d'enroulement du moyen de traction (34) autour du conteneur (9) fait au moins 90°, de préférence au moins 120°, plus encore de préférence au moins 150°.

5. Procédé pour sécuriser un objet de chargement dans un véhicule de transport selon l'une des revendications 1 à 4, dans lequel le véhicule de transport (1) présente une surface de chargement (2) et au moins une cloison (3) parallèle à un axe longitudinal (10) du véhicule de transport (1), sur laquelle est disposé respectivement un rail de fixation (5) parallèle à la surface de chargement (2) et proche de celle-ci pour placer des moyens de retenue (19), sachant que l'objet de chargement est un conteneur (9) comprenant une partie supérieure (11) entourant une cavité et une partie inférieure (12) en forme de châssis présentant un étai, comprenant les étapes suivantes :
- le conteneur (9) est déposé sur la surface de chargement (2) de manière adjacente à la cloison (3),
**caractérisé par** l'étape suivante :
- la partie inférieure (12) du conteneur (9) est couplée par complémentarité de forme au moyen d'au moins un élément de couplage (30) de l'élément de retenue (19) et le conteneur (9) est relié fixement au rail de fixation (5), dans sa totalité, sachant qu'une distance de l'élément de couplage (30) de l'élément de retenue (19) depuis la cloison (3) correspondante est réglée et l'élément de couplage (30) est fixé sur l'élément de retenue (19) dans une position de couplage.

6. Procédé selon la revendication 5, **caractérisé en ce que** chaque conteneur (9) est fixé après agencement dans sa position de transport via l'élément de retenue (19), sur un côté détourné d'une cloison avant (4) du véhicule de transport (1).

7. Procédé selon la revendication 5 ou 6, **caractérisé en ce que** l'élément de retenue (19) est agencé sur un chariot de fixation (20) et poussé conjointement avec celui-ci le long du rail de fixation (5) et fixé dans une position de fixation sur le rail de fixation (5).

8. Procédé selon l'une des revendications 5 à 7, **caractérisé en ce qu'**un étai, en particulier une branche (13) ou une base, de la partie inférieure (12) du conteneur (9), est reliée à l'élément de retenue (19) au moyen d'un élément de couplage (30) sous forme de préférence d'une patte de fixation.

9. Procédé pour sécuriser un objet de chargement dans un véhicule de transport (1) selon l'une des revendications 1 à 4, dans lequel le véhicule de transport (1) présente une surface de chargement (2) et au moins une cloison (3) parallèle à un axe longitudinal (10) du véhicule de transport (1), sur laquelle est disposé respectivement un rail de fixation parallèle à la surface de chargement (2) et proche de celle-ci, sachant que l'objet de chargement est un conteneur (9) et présente une partie supérieure (11) entourant une cavité et une partie inférieure (12) en forme de châssis présentant un étai, comprenant les étapes suivantes :
- le conteneur (9) est agencé sur la surface de chargement (2) de manière adjacente à la cloison (3),
**caractérisé par** les étapes suivantes :
- un premier élément de serrage (51) est agencé sur un côté du conteneur (9) tourné vers la cloison avant (4) du véhicule de transport (1) et un second élément de serrage (51) est agencé sur un côté du conteneur (9) détourné de la cloison avant (4), sachant que les deux éléments de serrage (51) sont reliés fixement au rail de fixation (5),
- le conteneur (9) est serré avec sa partie inférieure (12) entre les éléments de serrage (51) dans un sens parallèle à l'axe longitudinal (10) du véhicule de transport (1), en agrandissant la longueur effective d'au moins un des éléments de serrage (51).

10. Procédé selon la revendication 9, **caractérisé en ce que** les éléments de serrage (51) passent d'un état de départ dans lequel deux parties d'éléments, mobiles l'une par rapport à l'autre, se trouvent dans une position détachée, à un état de serrage dans lequel les parties d'éléments sont plus éloignées encore l'une de l'autre que dans l'état détaché, et qu'enfin, les parties d'éléments sont fixées l'une par rapport à l'autre dans l'état de serrage.

11. Système de sécurisation de chargement comprenant
- un rail de fixation (5) pouvant être intégré dans une cloison (3) qui est dans le sens longitudinal (10) d'un véhicule de transport (1), lequel est parallèle à une surface de chargement (2) du véhicule de transport (1) et proche de celle-ci, laquelle forme un angle droit avec la cloison (3) et
- un moyen de traction (34) qui peut être relié directement ou indirectement au rail de fixation (5) et qui peut être amarré avec l'un objet de chargement,
**caractérisé en ce que**
- l'objet de chargement est un conteneur (9) et présente une partie supérieure (11) entourant une cavité et une partie inférieure (12) en forme de châssis présentant un étai,
- le conteneur (9) est amarré au moyen d'au moins un moyen de traction (34) relié directement ou indirectement au rail de fixation (5) en direction de la surface de chargement (2),
- un moyen de traction (34) relié par une première extrémité au rail de fixation (5), pouvant être dirigé autour de la partie supérieure (11) du conteneur (9) et relié par une deuxième extrémité au rail de fixation (5), de sorte que, vu dans un plan vertical perpendiculairement à la cloison (3), une composante d'une force transmise par le moyen de traction (34) va en direction de la cloison (3), sachant que par une force agissant perpendiculairement à la surface de chargement (2), la force de frottement entre l'objet de chargement et la surface de chargement (2) est augmentée, sachant que la plus grande distance du moyen de traction (34) depuis la cloison (3) au niveau de la partie supérieure (11) fait plus de 50%, de préférence entre 90% et 100%, du diamètre ou de la largeur mesurée de la partie supérieure (11) perpendiculaire à la cloison latérale et
- la plus grande distance du moyen de traction (34) depuis la surface de chargement (2) fait plus de 50%, de préférence entre 70% et 100%, de la hauteur du conteneur (9) et
- le moyen de traction (34) est relié à un rail de fixation (5) précisément, sachant que l'ensemble des moyens de traction (34) sécurisant le conteneur (9) sont reliés à la même cloison (3).

12. Système de sécurisation de chargement selon la revendication 11, **caractérisé par** un élément adaptateur (35) de préférence sous forme d'une plaque adaptatrice qui peut être placée en complémentarité de forme sur une pièce rapportée en saillie au-dessus d'une surface d'enveloppe de la partie supérieure (11) du conteneur (9) et qui présente au moins une ouverture de passage pour un moyen de traction (34).

13. Système de sécurisation de chargement selon la revendication 11 ou 12, comprenant
- un rail de fixation (5) pouvant être intégré dans une cloison (3) qui est dans le sens longitudinal (10) d'un véhicule de transport (1), lequel est parallèle à une surface de chargement (2) du véhicule de transport (1) et proche de celle-ci, laquelle forme un angle droit avec la cloison (3) et
- un élément de retenue (19) qui peut être relié au rail de fixation (5),
**caractérisé en ce que**
- l'objet de chargement est un conteneur (9) et présente une partie supérieure (11) entourant une cavité et une partie inférieure (12) en forme de châssis présentant un étai et
- un élément de couplage (30) de l'élément de retenue (19) peut être relié par complémentarité de forme à la partie inférieure (12) du conteneur (9) et celui-ci peut être relié fixement au rail de fixation (5), dans sa totalité, sachant qu'une distance de l'élément de couplage (30) de l'élément de retenue (19) depuis la cloison (3) correspondante peut être réglée et l'élément de couplage (30) peut être fixé sur l'élément de retenue (19) dans une position de couplage.

14. Système de sécurisation de chargement selon la revendication 11 ou 12, comprenant
- un rail de fixation (5) pouvant être intégré dans une cloison (3) qui est dans le sens longitudinal (10) d'un véhicule de transport (1), lequel est parallèle à une surface de chargement (2) du véhicule de transport (1) et proche de celle-ci, laquelle forme un angle droit avec la cloison (3),
**caractérisé par**
- deux éléments de serrage (51), lesquels, vu dans le sens de l'axe longitudinal (10) du véhicule de transport (1), sont disposés sur des côtés opposés du conteneur (9), sont modifiables dans leur longueur effective et peuvent être reliés fixement au rail de fixation (5), sachant que la partie inférieure (12) du conteneur (9) peut être serrée entre les deux éléments de serrage (51) par modification de la longueur effective d'au moins un des éléments de serrage (51).

15. Système de sécurisation de chargement selon la revendication 14, **caractérisé en ce que** les éléments de serrage (51) peuvent passer d'un état de départ dans lequel deux parties d'éléments se trouvent en position détachée, à un état de serrage dans lequel les parties d'éléments sont plus éloignées encore l'une de l'autre que dans l'état détaché, sachant que les parties d'éléments peuvent être fixées l'une par rapport à l'autre dans l'état de serrage.

16. Système de sécurisation de chargement selon la revendication 14 ou 15, **caractérisé en ce que** les éléments de serrage (51) peuvent être couplés respectivement par complémentarité de forme à la partie inférieure (12) du conteneur (9) correspondant sur des côtés opposés, de telle sorte qu'un déplacement du conteneur (9) transversalement à l'axe longitudinal (10) du véhicule de transport (1) est empêché.

17. Système de sécurisation de chargement selon l'une des revendications 11 à 16, **caractérisé par** au moins un chariot de fixation (20) qui peut être poussé le long du rail de fixation (5) et couplé à celui-ci par complémentarité de forme et
- qui présente au moins un raccord pour un moyen de traction (34) et/ou
- sur lequel l'élément de couplage (30) de l'élément de retenue (19) est disposé et/ou
- sur lequel un élément de serrage (51) est disposé.

18. Système de sécurisation de chargement selon la revendication 17, **caractérisé en ce que** le rail de fixation (5) présente des évidements répartis dans son sens longitudinal dans lesquels peut être inséré au moins un élément de prise par l'arrière (21) du chariot de fixation (20), sachant qu'une complémentarité de forme entre le rail de fixation (5) contre-dépouillé et le chariot de fixation (20) peut être produite en poussant le chariot de fixation (20).

19. Système de sécurisation de chargement selon la revendication 17 ou 18, **caractérisé en ce que** l'élément de retenue (19) présentant de préférence un chariot de fixation (20) possède une console (24) perpendiculaire à la cloison (3) du véhicule de transport (1), sur le long de laquelle un élément coulissant (27) doté de l'élément de couplage (30) peut être poussé.

20. Système de sécurisation de chargement selon l'une des revendications 11 à 19, **caractérisé en ce que** le véhicule de transport (1) présente un coffre ou une remorque frigorifique et le rail de fixation (5) disposé sur des cloisons (3) opposées est fixé respectivement sur un élément de renfort se trouvant à l'intérieur de la cloison (3) correspondante et relié à un sol d'espace de chargement du véhicule de transport (1) formant la surface de chargement (2) et/ou à sa structure.
